# EUROPEAN PATENT APPLICATION

(11) **EP 2 991 443 A1**
(43) Date of publication of application: **02.03.2016**
(21) Application number: 14788221.1
(22) Date of filing: 11.04.2014
(51) Int. Cl.: H04W 92/18

(54) **USER TERMINAL, BASE STATION, AND PROCESSOR**

(30) Priority: 25.04.2013 JP 2013093039
(71) Applicant: Kyocera Corporation, Kyoto-shi Kyoto 612-8501 (JP)
(72) Inventor: MORITA, Kugo, Kyoto-shi Kyoto 612-8501 (JP); IWABUCHI, Akinori, Kyoto-shi Kyoto 612-8501 (JP); KASHIWASE, Susumu, Kyoto-shi Kyoto 612-8501 (JP)
(74) Representative: Schwabe - Sandmair - Marx
(86) International application number: PCT/JP2014/060523
(87) International publication number: WO 2014/175082

(57) **Abstract**

A UE 100 comprises a controller configured to select either a normal mode in which D2D communication is controlled by a network or a public safety mode in which the D2D communication is controlled by the UE 100 instead of the network, as a mode to be applied to the D2D communication. The UE 100 selects either the normal mode or the public safety mode on the basis of a reception situation of a public safety allowance signal and a public safety prohibition signal transmitted depending on a situation of the network.

## Description

### TECHNICAL FIELD

The present invention relates to a user terminal, a base station, and a processor applied to a mobile communication system for supporting D2D communication.

### BACKGROUND ART

There has been considered to introduce device to device (D2D) communication as a new function after the release 12 in the 3GPP (3rd Generation Partnership Project) which is a standard project of the mobile communication systems (see Non-Patent Literature 1).

In the D2D communication, a plurality of neighboring user terminals performs direct communication. On the other hand, a data path for general communication (cellular communication) in a mobile communication system routes a core network.

When a user terminal freely performs the D2D communication, an interference may be caused on other user terminals and base stations present around the user terminal, and thus it is assumed that the D2D communication is controlled under control of a network including the core network.

### PRIOR ART DOCUMENT

### NON-PATENT DOCUMENT

Non Patent Document 1:3GPP technical report "TR 22.803 V1.1.0" November, 2012

### SUMMARY OF THE INVENTION

However, when a network situation is unstable due to an occurrence of disaster such as earthquake, the D2D communication is difficult to keep on controlling in the network, and thus there is a problem that the D2D communication is disabled.

It is therefore an object of the present invention to provide a user terminal, a base station, and a processor being able of effectively using the D2D communication.

According to an embodiment, a user terminal is a user terminal in a mobile communication system comprising a network configured to control D2D communication being direct device to device communication, the user terminal comprises: a controller configured to select either a first mode in which the D2D communication is controlled by the network or a second mode in which the D2D communication is controlled by the user terminal instead of the network, as a mode to be applied to the D2D communication. The controller selects either the first mode or the second mode on the basis of a reception situation of a predetermined signal transmitted depending on a situation of the network.

### BRIEF DESCRIPTION OF THE DRAWINGS

[Fig.1] Fig. 1 is a configuration diagram of a LTE system.
[Fig.2] Fig. 2 is a block diagram of UE.
[Fig.3] Fig. 3 is a block diagram of an eNB.
[Fig.4] Fig. 4 is a protocol stack diagram of a radio interface in the LTE system.
[Fig.5] Fig. 5 is a configuration diagram of a radio frame used in the LTE system.
[Fig.6] Fig. 6 is a diagram illustrating a data path in cellular communication.
[Fig.7] Fig. 7 is a diagram illustrating a data path in the D2D communication.
[Fig.8] Fig. 8 is a sequence diagram illustrating exemplary operations of a mobile communication system according to a first embodiment.
[Fig.9] Figs. 9 is diagrams for illustrating band information included in a public safety allowance signal.
[Fig.10] Fig. 10 is a flowchart for illustrating processing of confirming connection between an eNB 200 and a higher-level apparatus via a backhaul.
[Fig.11] Fig. 11 is a flowchart for illustrating processing when a first timer expires.
[Fig. 12] Fig. 12 is a flowchart for illustrating processing when a second timer expires.
[Fig.13] Fig. 13 is a flowchart for illustrating processing of confirming connection between an eNB 200 and a higher-level apparatus via a backhaul.
[Fig.14] Fig. 14 is a flowchart for illustrating processing of confirming connection between an eNB 200 and a neighboring eNB 200n via an X2 interface.
[Fig.15] Fig. 15 is a flowchart for illustrating processing when a third timer expires.
[Fig,16] Fig. 16 is a flowchart for illustrating processing when a 3n-th timer expires.
[Fig.17] Fig. 17 is a flowchart for illustrating processing of monitoring power supply to an eNB 200.
[Fig.18] Fig. 18 is a flowchart for illustrating processing when the remaining amount of battery in an eNB 200 lowers a predetermined threshold.
[Fig.19] Fig. 19 is a flowchart for illustrating processing of deciding whether to transmit a public safety prohibition signal.
[Fig.20] Fig. 20 is a flowchart for illustrating processing of UE 100 based on a reception situation of a public safety allowance signal from an eNB 200.
[Fig.21] Fig. 21 is a flowchart for illustrating processing when a fourth timer expires.
[Fig.22] Fig. 22 is a flowchart for illustrating processing based on a reception situation of a public safety allowance signal from an eNB 200n.
[Fig.23] Fig. 23 is a flowchart for illustrating processing when a 4n-th timer expires.
[Fig.24] Fig. 24 is a flowchart for illustrating processing of handling a state of an eNB 200n in UE 100.
[Fig.25] Fig. 25 is a flowchart for illustrating processing of confirming connection between an eNB 200 and a higher-level apparatus via a backhaul.
[Fig.26] Fig. 26 is a flowchart for illustrating processing when a fifth timer expires.
[Fig.27] Fig. 27 is a flowchart for illustrating processing of monitoring power supply to an eNB 200.
[Fig.28] Fig. 28 is a sequence diagram illustrating exemplary operations of a mobile communication system according to a second embodiment.
[Fig.29] Fig. 29 is a flowchart for illustrating processing a D2D communication mode selection processing by UE 100 based on a reception situation of a signal from an eNB 200.
[Fig.30] Fig. 30 is a flowchart for illustrating processing when a seventh timer expires.
[Fig.31] Fig. 31 is a flowchart for illustrating processing of selecting a mode applied to the D2D communication in UE 100 on the basis of a reception situation of a signal from an eNB 200n.
[Fig.32] Fig. 32 is a flowchart for illustrating processing when an allowance update timer expires.

### DESCRIPTION OF THE EMBODIMENT

### [Overview of Embodiment]

A user terminal according to an embodiment is a user terminal in a mobile communication system comprising a network configured to control D2D communication being direct device to device communication, and comprises: a controller configured to select either a first mode in which the D2D communication is controlled by the network or a second mode in which the D2D communication is controlled by the user terminal instead of the network, as a mode to be applied to the D2D communication. The controller selects either the first mode or the second mode on the basis of a reception situation of a predetermined signal transmitted depending on a situation of the network. Thereby, either the first mode or the second mode can be selected as needed depending on a situation of the network, and thus the D2D communication can be effectively used.

In the first embodiment, the predetermined signal is an allowance signal for allowing to select the second mode, and when receiving the allowance signal, the controller selects the second mode. Thereby, the base station can designate a timing at which the D2D communication is controlled by the user terminal, and thus the performing the D2D communication for the user terminal to freely apply the public safety mode is restricted. Consequently, an interference can be prevented from occurring.

In the first embodiment, the user terminal receives signals from one or more base stations included in the network, and when receiving the allowance signals from all of the one or more base stations, the controller selects the second mode. Thereby, all the base stations present around the user terminal apply the secondary mode thereby to allow the D2D communication so that even if the user terminal applies the secondary mode to perform the D2D communication, an interference on the base stations is less likely to occur.

In the first embodiment, when receiving the allowance signal after receiving an emergency flash report indicating information on disasters, the controller selects the second mode. Thereby, an emergency flash report is transmitted from the base station and then a public safety allowance signal is transmitted, and thus a situation of the network is likely to be unstable. Therefore, it is possible to prevent the secondary mode from being selected when a public safety allowance signal is erroneously transmitted.

In the first embodiment, the allowance signal includes information indicating a frequency band to be used for the D2D communication. Thereby, an interference given by the user terminal performing the D2D communication can be further restricted than when the user terminal uses a frequency band used for the D2D communication thereby to freely schedule.

In the first embodiment, while the second mode is selected as the mode, the controller preferentially performs the D2D communication ahead of cellular communication when being able to perform the cellular communication being communication via a core network included in the network. Thereby, the D2D communication can further reduce loads on the unstable network than cellular communication via a core network.

In the first embodiment, the allowance signal is transmitted when a situation of the network is that a signal is interrupted to a base station via a backhaul from a higher-level apparatus of the base station included in the network. Thereby, when a situation of the network is bad in this way, the D2D communication is performing under control of the user terminal and thus the D2D communication can be effectively used.

In the first embodiment, the allowance signal is transmitted when a situation of the network is that a signal is interrupted to a base station via a backhaul from a higher-level apparatus of the base station included in the network and a signal is interrupted to the base station via an X2 interface from a neighboring base station adjacent to the base station.

In the first embodiment, the allowance signal is transmitted when a situation of the network is that power supply to a base station included in the network is shut off and a remaining amount of a battery provided in the base station lowers a threshold.

In the first embodiment, the predetermined signal is a prohibition signal for prohibiting selection of the second mode, and when receiving the prohibition signal, the controller selects the first mode. Thereby, the base station can designate a timing at which the D2D communication is controlled by the user terminal, and the performing the D2D communication for the user terminal to freely apply the public safety mode is restricted. Consequently, an interference can be prevented from occurring.

In the first embodiment, while the second mode is selected as the mode, the controller selects the first mode when not receiving the allowance signal for a predetermined period of time after receiving a signal from a base station included in the network. Thereby, when the base station does not allow public safety, the user terminal can be prevented from indefinitely performing the D2D communication in the second mode.

In the second embodiment, the controller selects the second mode when not receiving a signal from a base station included in the network for a predetermined period of time after receiving an emergency flash report indicating information on disasters from the base station. Thereby, even when not receiving a public safety allowance signal from the base station, the user terminal can select the second mode.

In the second embodiment, while the second mode is selected as the mode, the controller selects the first mode when having received a signal from the base station. Thereby, even when the base statin does not transmit a public safety prohibition signal, the user terminal can select the normal mode, and thus the user terminal can be prevented from indefinitely performing the D2D communication in the second mode.

A base station according to an embodiment is a base station in a mobile communication system comprising a network configured to control D2D communication being direct device to device communication and the base station included in the network, and comprises: a transmitter configured to transmit an allowance signal for allowing to select a second mode or a prohibition signal for prohibiting selection of the second mode to a user terminal capable of selecting either a first mode in which the D2D communication is controlled by the network or the second mode in which the D2D communication is controlled by the user terminal instead of the network, as a mode to be applied to the D2D communication; and a controller configured to control transmission of the allowance signal or the prohibition signal depending on a situation of the network including the base station.

In other embodiment, while the selection of the second mode is prohibited, the controller transmits the prohibition signal together with a signal used for establishing connection when the user terminal selecting the second mode requests to establish the connection with the base station.

A processor according to an embodiment is a processor provided in a user terminal in a mobile communication system comprising a network configured to control D2D communication being direct device to device communication, and performs: a processing of selecting either a first mode in which the D2D communication is controlled by the network or a second mode in which the D2D communication is controlled by the user terminal instead of the network, as a mode to be applied to the D2D communication; and a processing of selecting either the first mode or the second mode on the basis of a reception situation of a predetermined signal transmitted depending on a situation of the network.

Hereinafter, with reference to the accompanying figures, each embodiments in which the D2D communication is introduced to a cellular mobile communication system (hereinafter, "an LTE system") configured based on 3GPP standards will be described.

### [First Embodiment]

Hereinafter, a first embodiment will be described.

### (LTE system)

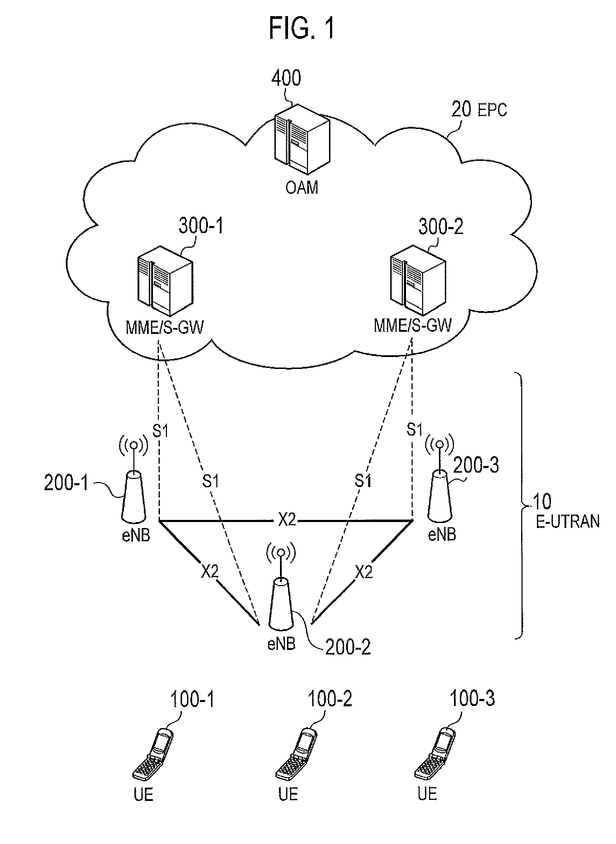

Fig. 1 is a configuration diagram of an LTE system according to the present embodiment.

As illustrated in Fig. 1, the LTE system includes a plurality of UEs (User Equipments) 100, E-UTRAN (Evolved Universal Terrestrial Radio Access Network) 10, and EPC (Evolved Packet Core) 20. The E-UTRAN 10 and the EPC 20 constitute a network.

The UE 100 is a mobile radio communication device and performs radio communication with a cell (a serving cell) with which a connection is established. The UE 100 corresponds to the user terminal.

The E-UTRAN 10 includes a plurality of eNBs 200 (evolved Node-Bs). The eNB 200 corresponds to a base station. The eNB 200 controls a cell and performs radio communication with the UE 100 that establishes a connection with the cell.

It is noted that the "cell" is used as a term indicating a minimum unit of a radio communication area, and is also used as a term indicating a function of performing radio communication with the UE 100.

The eNB 200, for example, has a radio resource management (RRM) function, a routing function of user data, and a measurement control function for mobility control and scheduling.

The EPC 20 includes MMEs (Mobility Management Entities)/S-GWs (Serving-Gateways) 300, and OAM (Operation and Maintenance) 400. Furthermore, the EPC 200 corresponds to a core network.

The MME is a network node for performing various mobility controls, etc., for the UE 100 and corresponds to a control station. The S-GW is a network node that performs transfer control of user data and corresponds to a mobile switching center.

The eNBs 200 are connected mutually via an X2 interface. Furthermore, the eNB 200 is connected to the MME/S-GW 300 via an S1 interface.

The OAM 400 is a server device managed by an operator and performs maintenance and monitoring of the E-UTRAN 10.

Next, configurations of the UE 100 and the eNB 200 will be described.

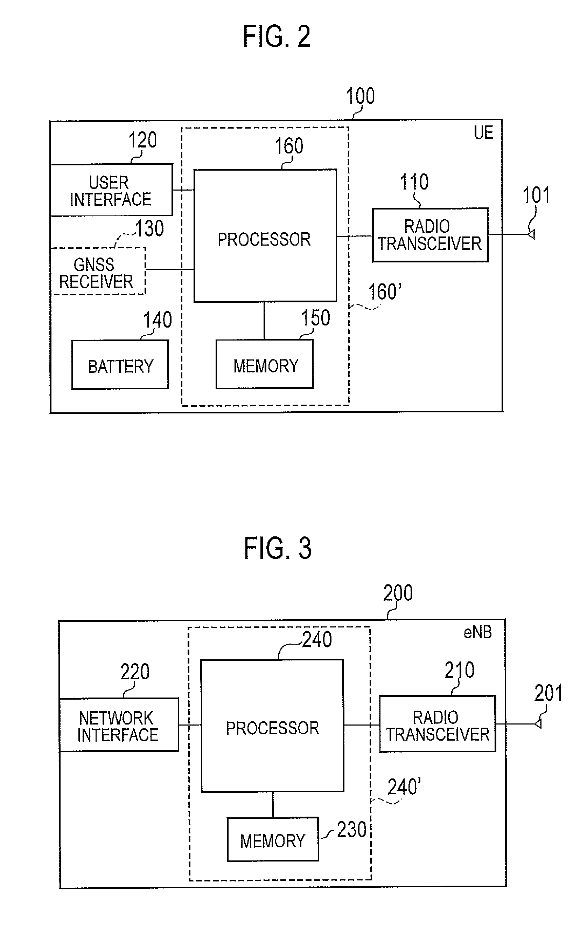

Fig. 2 is a block diagram of the UE 100. As illustrated in Fig. 2, the UE 100 includes an antenna 101, a radio transceiver 110, a user interface 120, a GNSS (Global Navigation Satellite System) receiver 130, a battery 140, a memory 150, and a processor 160. The memory 150 and the processor 160 constitute a controller.

The controller selects either a normal mode or a public safety mode as a mode to be applied to the D2D communication. It is noted that the normal mode and the public safety mode will be described later.

The UE 100 may not have the GNSS receiver 130. Furthermore, the memory 150 may be integrally formed with the processor 160, and this set (that is, a chipset) may be called a processor 160' constituting the controller.

The antenna 101 and the radio transceiver 110 are used to transmit and receive a radio signal. The antenna 101 includes a plurality of antenna elements. The radio transceiver 110 converts a baseband signal output from the processor 160 into the radio signal, and transmits the radio signal from the antenna 101. Furthermore, the radio transceiver 110 converts the radio signal received by the antenna 101 into the baseband signal, and outputs the baseband signal to the processor 160.

The user interface 120 is an interface with a user carrying the UE 100, and includes, for example, a display, a microphone, a speaker, and various buttons. The user interface 120 receives an operation from a user and outputs a signal indicating the content of the operation to the processor 160.

The GNSS receiver 130 receives a GNSS signal in order to obtain location information indicating a geographical location of the UE 100, and outputs the received signal to the processor 160.

The battery 140 accumulates a power to be supplied to each block of the UE 100.

The memory 150 stores a program to be executed by the processor 160 and information to be used for a process by the processor 160.

The processor 160 includes a baseband processor that performs modulation and demodulation, encoding and decoding and the like of the baseband signal, and a CPU (Central Processing Unit) that performs various processes by executing the program stored in the memory 150. The processor 160 may further include a codec that performs encoding and decoding of sound and video signals. The processor 160 implements various processes and various communication protocols described later.

Fig. 3 is a block diagram of the eNB 200. As illustrated in Fig. 3, the eNB 200 includes an antenna 201, a radio transceiver 210, a network interface 220, a memory 230, and a processor 240. The memory 230 and the processor 240 constitute a controller. Furthermore, the memory 230 may be integrally formed with the processor 240, and this set (that is, a chipset) may be called a processor 240' constituting the controller.

The memory 230 stores a state of the eNB 200. The controller selects the state of the eNB 200 on the basis of a predetermined condition. Details of the state of the eNB 200 will be described later.

The antenna 201 and the radio transceiver 210 are used to transmit and receive a radio signal. The antenna 201 includes a plurality of antenna elements. The radio transceiver 210 converts the baseband signal output from the processor 240 into the radio signal, and transmits the radio signal from the antenna 201. Furthermore, the radio transceiver 210 converts the radio signal received by the antenna 201 into the baseband signal, and outputs the baseband signal to the processor 240.

The network interface 220 is connected to the neighboring eNB 200 via the X2 interface and is connected to the MME/S-GW 300 via the S1 interface. The network interface 220 is used in communication performed on the X2 interface and communication performed on the S1 interface.

The memory 230 stores a program to be executed by the processor 240 and information to be used for a process by the processor 240.

The processor 240 includes the baseband processor that performs modulation and demodulation, and encoding and decoding of the baseband signal and a CPU that performs various processes by executing the program stored in the memory 230. The processor 240 implements various processes and various communication protocols described later.

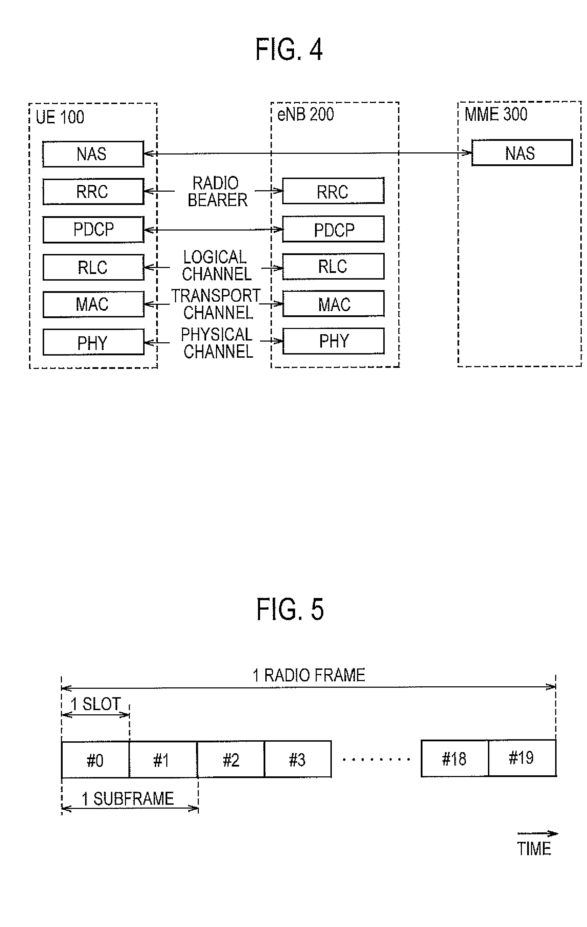

Fig. 4 is a protocol stack diagram of a radio interface in the LTE system.

As illustrated in Fig. 4, the radio interface protocol is classified into a layer 1 to a layer 3 of an OS1 reference model, wherein the layer 1 is a physical (PHY) layer. The layer 2 includes a MAC (Media Access Control) layer, an RLC (Radio Link Control) layer, and a PDCP (Packet Data Convergence Protocol) layer. The layer 3 includes an RRC (Radio Resource Control) layer.

The PHY layer performs encoding and decoding, modulation and demodulation, antenna mapping and demapping, and resource mapping and demapping. The PHY layer provides a transmission service to an upper layer by using a physical channel. Between the PHY layer of the UE 100 and the PHY layer of the eNB 200, data is transmitted through the physical channel.

The MAC layer performs preferential control of data, and a retransmission process and the like by hybrid ARQ (HARQ). Between the MAC layer of the UE 100 and the MAC layer of the eNB 200, data is transmitted through a transport channel. The MAC layer of the eNB 200 includes MAC scheduler that determines an uplink and downlink transport format (a transport block size, a modulation and coding scheme, and the like) and an allocated resource block.

The RLC layer transmits data to an RLC layer of a reception side by using the functions of the MAC layer and the PHY layer. Between the RLC layer of the UE 100 and the RLC layer of the eNB 200, data is transmitted through a logical channel.

The PDCP layer performs header compression and decompression, and encryption and decryption.

The RRC layer is defined only in a control plane. Between the RRC layer of the UE 100 and the RRC layer of the eNB 200, a control signal (an RRC message) for various types of setting is transmitted. The RRC layer controls the logical channel, the transport channel, and the physical channel in response to establishment, re-establishment, and release of a radio bearer. When an RRC connection is established between the RRC of the UE 100 and the RRC of the eNB 200, the UE 100 is in a connected state, and when the RRC connection is not established, the UE 100 is in an idle state.

A NAS (Non-Access Stratum) layer positioned above the RRC layer performs session management or mobility management, for example.

Fig. 5 is a configuration diagram of a radio frame used in the LTE system. In the LTE system, OFDMA (Orthogonal Frequency Division Multiplexing Access) is used in a downlink, and SC-FDMA (Single Carrier Frequency Division Multiple Access) is used in an uplink, respectively.

As illustrated in Fig. 5, the radio frame is configured by 10 subframes arranged in a time direction, wherein each subframe is configured by two slots arranged in the time-period direction. Each subframe has a length of 1 ms and each slot has a length of 0.5 ms. Each subframe includes a plurality of resource blocks (RBs) in a frequency direction, and a plurality of symbols in the time-period direction. Each symbol is provided at a head thereof with a guard interval called a cyclic prefix (CP). The resource block includes a plurality of subcarriers in the frequency direction. A radio resource unit configured by one subcarrier and one symbol is called a resource element (RE).

Among radio resources allocated to the UE 100, a frequency resource can be designated by a resource block and a time-period resource can be designated by a subframe (or slot).

In the downlink, an interval of several symbols at the head of each subframe is a control region mainly used as a physical downlink control channel (PDCCH). Furthermore, the remaining interval of each subframe is a region mainly used as a physical downlink shared channel (PDSCH). Moreover, in each subframe, cell-specific reference signals (CRSs) are distributed and arranged.

In the uplink, both ends in the frequency direction of each subframe are control regions mainly used as a physical uplink control channel (PUCCH). Furthermore, the center portion in the frequency direction of each subframe is a region mainly used as a physical uplink shared channel (PUSCH). Moreover, in each subframe, a demodulation reference signal (DMRS) and a sounding reference signal (SRS) are arranged.

### (D2D communication)

Next, general communication (cellular communication) of the LTE system and the D2D communication will be described by comparison.

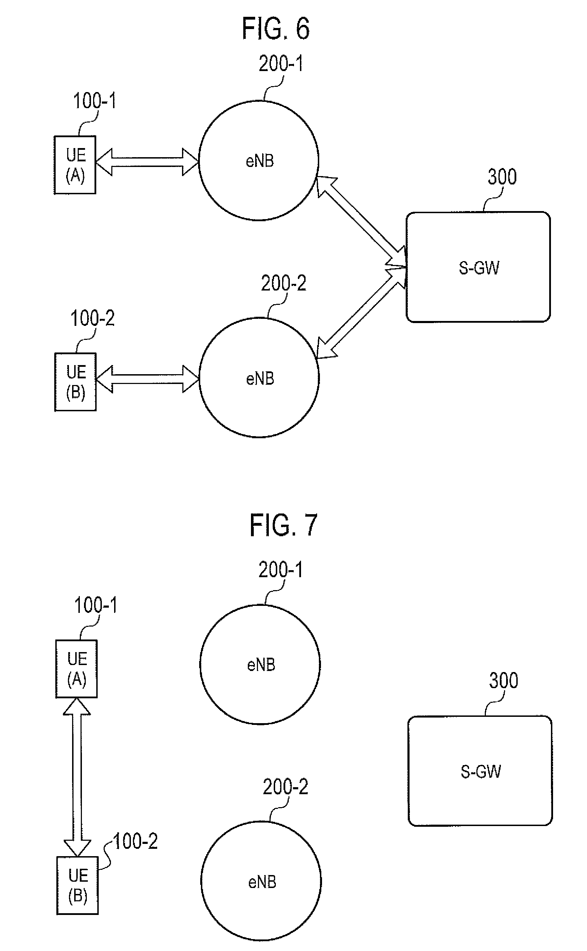

Fig. 6 is a diagram illustrating a data path in the cellular communication. In this case, Fig. 6 illustrates the case in which the cellular communication is performed between UE 100-1 having established a connection with eNB 200-1 and UE 100-2 having established a connection with eNB 200-2. It is noted that the data path indicates a transfer path of user data (a user plane).

As illustrated in Fig. 6, the data path of the cellular communication passes through the network. Specifically, the data path is set to pass through the eNB 200-1, the S-GW 300, and the eNB 200-2.

Fig. 7 is a diagram illustrating a data path in the D2D communication. In this case, Fig. 7 illustrates the case in which the D2D communication is performed between the UE 100-1 having established a connection with the eNB 200-1 and the UE 100-2 having established a connection with the eNB 200-2.

For example, one UE 100 of the UE 100-1 and the UE 100-2 discovers the other UE 100 existing in the vicinity of the one UE 100, so that the D2D communication starts. It is noted that in order to start the D2D communication, the UE 100 has a (Discover) function of discovering the other UE 100 existing in the vicinity of the UE 100. Furthermore, the UE 100 has a (Discoverable) function discovered by the other UE 100.

As illustrated in Fig. 7, the data path of the D2D communication does not pass through the network. That is, direct radio communication is performed between the UEs. As described above, when the UE 100-2 exists in the vicinity of the UE 100-1, the D2D communication is performed between the UE 100-1 and the UE 100-2, thereby obtaining an effect that a traffic load of the network and a battery consumption amount of the UE 100 are reduced, for example.

### (Normal mode and public safety mode)

The UE 100 performs the D2D communication in one mode of the normal mode (first mode) and the public safety mode (second mode). That is, one of the normal mode and the public safety mode is applied as a mode for the D2D communication (D2D communication mode).

The normal mode is a mode in which the D2D communication is controlled by the network. The network includes the eNBs 200 and higher-level apparatuses (such as MME/S-GW 300) of the eNBs 200. In the normal mode, the network schedules radio resources in the D2D communication thereby to control the D2D communication. The network may perform a command of starting or ending the D2D communication to the UE 100 in order to control the D2D communication.

The public safety mode is a mode in which the D2D communication is controlled by the UE 100 instead of the network. In the public safety mode, the UE 100 schedules radio resources in the D2D communication thereby to control the D2D communication.

In the public safety mode, when cellular communication is able to be performed, the D2D communication may be preferentially performed ahead of cellular communication. For example, when the user operates to start a call, a discovery processing of a communication partner terminal in the D2D communication may be performed, and when a communication partner terminal cannot be discovered, a processing of performing cellular communication may be started.

The normal mode is a general mode while the public safety mode cannot be freely selected by the user. As described below, the public safety mode is selected under predetermined conditions.

In the normal mode, the UE 100 performing the D2D communication may be billed, while in the public safety mode, the UE 100 performing the D2D communication may not be billed.

### (States of eNB 200)

The states of the eNB 200 are classified into some kinds as described below. According to the present embodiment, the states of the eNB 200 are classified into five kinds.

The first state of the eNB 200 is a state of the eNB 200 for public safety. The state of the eNB 200 for public safety is a public safety prohibition state or a public safety allowance state. The eNB 200 selects either the public safety prohibition state or the public safety allowance state as the state of the eNB 200 for public safety.

The public safety prohibition state is a state in which the eNB 200 prohibits the UE 100 under its control from selection of the public safety mode. The public safety allowance state is a state in which the eNB 200 allows the UE 100 under its control to select the public safety mode. When the eNB 200 normally operates, the public safety prohibition state is selected.

The second state of the eNB 200 is a state of the eNB 200 for backhaul. The state of the eNB 200 for backhaul is a backhaul connection state or a backhaul disconnected state. The eNB 200 selects either the backhaul connected state or the backhaul disconnected state as the state of the eNB 200 for backhaul.

The backhaul connected state is a state in which the eNB 200 is connected to a higher-level apparatus of the eNB 200 via the backhaul and the eNB 200 and the higher-level apparatus of the eNB 200 are able to communicate via the backhaul. The backhaul disconnected state is a state in which the eNB 200 is disconnected from a higher-level apparatus via the backhaul and the eNB 200 and the higher-level apparatus of the eNB 200 are not able to communicate via the backhaul.

The third state of the eNB 200 is a state of the eNB 200 for connection of an n-th neighboring eNB 200n. The state of the eNB 200 for connection of a neighboring eNB 200n is an eNB 200n connected state or an eNB 200n disconnected state. The eNB 200 selects either the eNB 200n connected state or the eNB 200n disconnected state as the state of the eNB 200 for connection of a neighboring eNB 200n.

The eNB 200n connected state is a state in which the eNB 200 is connected with a neighboring eNB 200n adjacent to the eNB 200 via the X2 interface and the eNB 200 and the eNB 200n are able to communicate via the X2 interface. The eNB 200n disconnected state is a state in which the eNB 200 is disconnected from an eNB 200n via the X2 interface and the eNB 200 and the eNB 200n are not able to communicate via the X2 interface.

The fourth state of the eNB 200 is a state of the eNB 200 for power supply. The state of the eNB 200 for power supply is a power supplied state or a power unsupplied state. The eNB 200 selects either the power supplied state or the power unsupplied state.

The power supplied state is a state in which the eNB 200 is supplied with power from the outside. The power unsupplied state is a state in which the eNB 200 is not supplied with power from the outside.

The fifth state of the eNB 200 is a state of the eNB 200 for emergency flash report. The state of the eNB 200 for emergency flash report is an emergency flash report transmitted state or an emergency flash report non-transmitted state. The eNB 200 selects either the emergency flash report transmitted state or the emergency flash report non-transmitted state.

The emergency flash report transmitted state is a state in which the eNB 200 transmits an emergency flash report. The emergency flash report non-transmitted state is a state in which the eNB 200 stops transmitting an emergency flash report.

The eNB 200 selects a predetermined state for each of the first to fifth states.

### (Schematic operations of mobile communication system according to first embodiment)

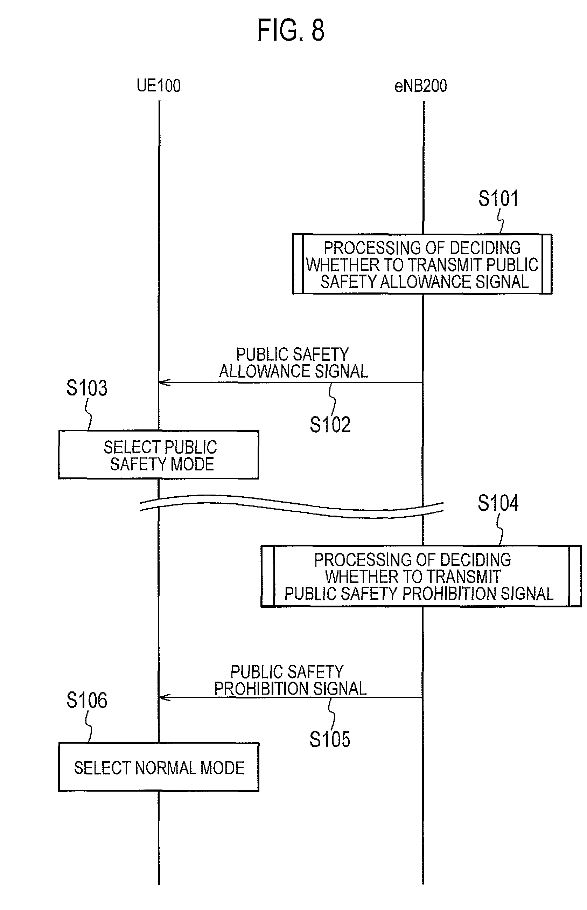

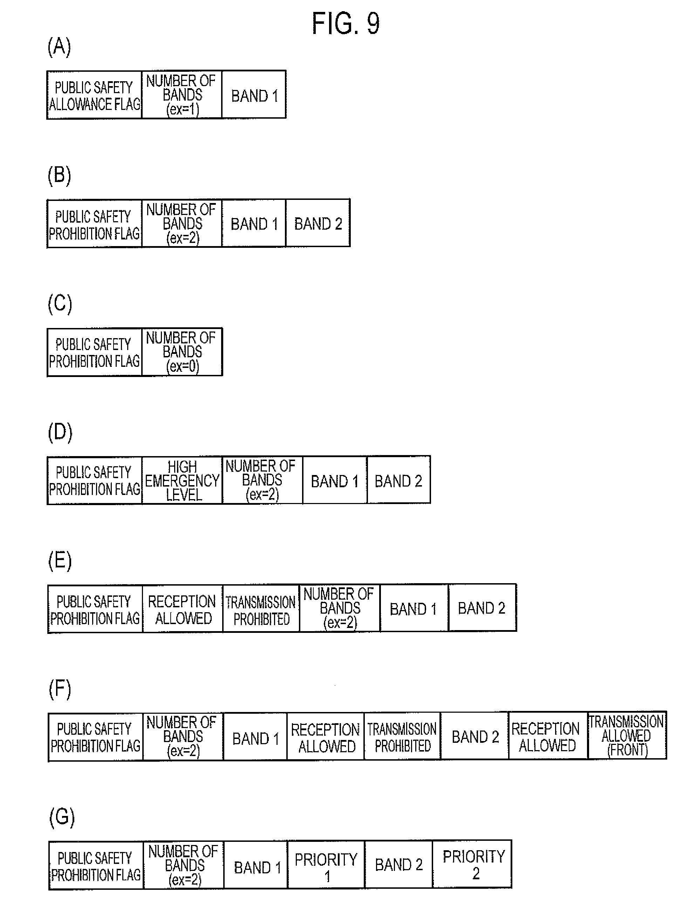

The schematic operations of the mobile communication system according to the first embodiment will be described below with reference to Fig. 8 and Fig. 9.

Fig. 8 is a sequence diagram illustrating the exemplary operations of the mobile communication system according to the first embodiment. Figs. 9 is diagrams for illustrating band information included in a public safety allowance signal.

As illustrated in Fig. 8, in step S101, the eNB 200 performs a processing of deciding whether to transmit a public safety allowance signal. The processing of deciding whether to transmit a public safety allowance signal will be described below in detail. In the following, the description will be made assuming that the eNB 200 decides to transmit a public safety allowance signal.

In step S102, the eNB 200 transmits a public safety allowance signal. The eNB 200 may transmit the public safety allowance signal in broadcasting or unicasting. The UE 100 receives the public safety allowance signal.

As illustrated in Fig. 9, the public safety allowance signal includes information indicating a frequency band to be used for the D2D communication.

Specifically, for example, as illustrated in Fig. 9(A), the public safety allowance signal includes a flag (public safety allowance flag) to allow public safety, the number of frequency bands usable for the D2D communication (number of bands), and information on a frequency band (band 1) to be used for the D2D communication.

As illustrated in Fig. 9(B), the public safety allowance signal may include a flag (public safety prohibition flag) to prohibit public safety, the number of frequency bands usable for the D2D communication (number of bands), and information on a plurality of frequency bands (band 1 and band 2) to be used for the D2D communication. When the public safety prohibition flag is off, the UE 100 can select the public safety mode.

As illustrated in Fig. 9(C), the public safety allowance signal may include a flag (public safety prohibition flag) to prohibit public safety and information on the number of frequency bands usable for the D2D communication (number of bands). When the public safety allowance signal does not include the information on a frequency band to be used for the D2D communication, it may indicate that the D2D communication can be performing by use of all the frequency bands.

As illustrated in Fig. 9(D), the public safety allowance signal may include a flag (public safety prohibition flag) to prohibit public safety, information on an emergency level (high emergency level), the number of frequency bands usable for the D2D communication (number of bands), and information on a plurality of frequency bands (band 1 and band 2) to be used for the D2D communication.

As illustrated in Fig. 9(E), the public safety allowance signal may include a flag (public safety prohibition flag) to prohibit public safety, information on kinds (reception allowed and transmission prohibited) of the D2D communication enabled for all the frequency bands to be used for the D2D communication, the number of frequency bands usable for the D2D communication (number of bands), and information on a plurality of frequency bands (band 1 and band 2) to be used for the D2D communication.

As illustrated in Fig. 9(F), the public safety allowance signal may include a flag (public safety prohibition flag) to prohibit public safety, the number of frequency bands usable for the D2D communication (number of bands), information on a plurality of frequency bands (band 1 and band 2) to be used for the D2D communication, and information on kinds of the D2D communication (reception allowed, transmission prohibited, and transmission allowed (front)) allowed for each frequency band to be used for the D2D communication. "Transmission allowed (front)" indicates that transmission may be allowed only for the UE 100 receiving the D2D communication.

As illustrated in Fig. 9(G), the public safety allowance signal may include a flag (public safety prohibition flag) to prohibit public safety, the number of frequency bands usable for the D2D communication (number of bands), information on a plurality of frequency bands (band 1 and band 2) to be used for the D2D communication, and information on priorities (priority 1 and priority 2). A frequency band with a higher priority (such as band 1 with priority 1) is preferentially used ahead of a frequency band with a lower priority (such as band 2 with priority 2).

It is noted that, for example, the priority may be indicated in order of information indicating frequency bands, such as an early-indicated frequency band has a higher priority than a later-indicated frequency band. For example, in Fig. 9(B), band 1 may have a higher priority than band 2.

Returning to Fig. 8, in step S103, the UE 100 selects the public safety mode in response to reception of the public safety allowance signal.

In step S104, the eNB 200 performs a processing of deciding whether to transmit a public safety prohibition signal. The processing of deciding whether to transmit a public safety prohibition signal will be described below in detail. In the following, the description will be made assuming that the eNB 200 decides to transmit a public safety prohibition signal.

In step S105, the eNB 200 transmits a public safety prohibition signal. The eNB 200 may transmit the public safety prohibition signal in broadcasting or unicasting. The UE 100 receives the public safety prohibition signal.

In step S106, the UE 100 selects the normal mode in response to reception of the public safety prohibition signal.

The UE 100 may select the normal mode on the basis of a reception situation of the public safety allowance signal even if the UE 100 does not receive a public safety prohibition signal.

### (Operations of eNB 200)

The operations of the eNB 200 will be described below. Specifically, (1) the processing of deciding whether to transmit a public safety allowance signal and (2) the processing of deciding whether to transmit a public safety prohibition signal will be described.

### (1) Processing of deciding whether to transmit public safety allowance signal

### (A) Processing operation pattern 1

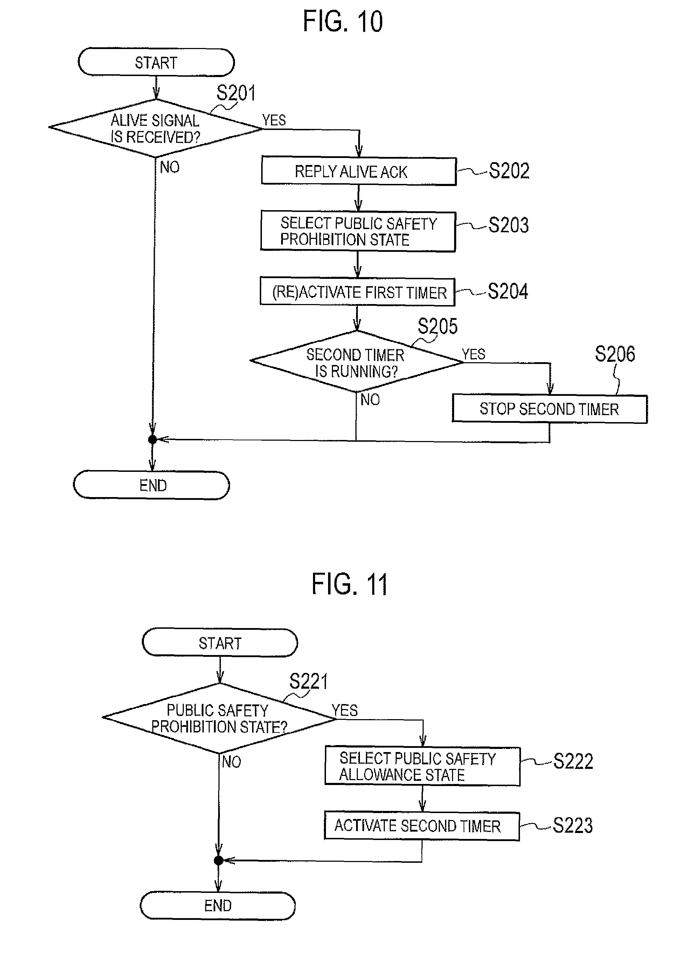

There will be first described, with reference to Fig. 10 to Fig. 12, a case in which when communication is interrupted via the backhaul, the eNB 200 transmits a public safety allowance signal.

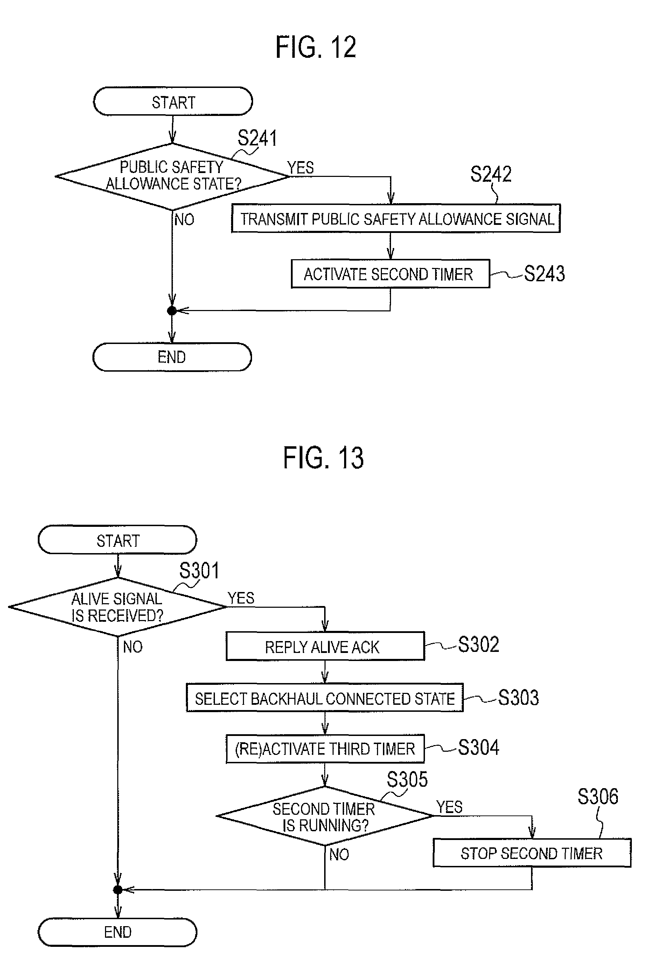

Fig. 10 is a flowchart for illustrating processing of confirming connection between the eNB 200 and a higher-level apparatus via the backhaul. Fig. 11 is a flowchart for illustrating processing when a first timer expires. Fig. 12 is a flowchart for illustrating processing when a second timer expires.

The processing of confirming connection between the eNB 200 and a higher-level apparatus via the backhaul will be first described.

As illustrated in Fig. 10, in step S201, the eNB 200 decides whether it has received an alive signal from a higher-level apparatus of the eNB 200 via the backhaul.

When not having received an alive signal (No), the eNB 200 terminates the processing. On the other hand, when having received an alive signal (Yes), the eNB 200 performs the processing in step S202.

In step S202, the eNB 200 replies alive ack indicating reception of an alive signal to the higher-level apparatus.

In step S203, the eNB 200 selects the public safety prohibition state. Thereby, the state of the eNB 200 for public safety enters the public safety prohibition state. That is, the eNB 200 prohibits the UE 100 under the eNB 200 from performing the D2D communication controlled by the UE 100.

In step S204, the eNB 200 activates the first timer. When the first timer is already activated, the eNB 200 reactivates the first timer. Thereby, the first timer starts counting from the beginning.

In step S205, the eNB 200 decides whether the second timer is running. When the second timer is not running (No), the eNB 200 terminates the processing. On the other hand, when the second timer is running (Yes), the eNB 200 performs the processing in step S206.

In step S206, the eNB 200 stops the second timer and terminates the processing.

The processing when the first timer expires will be described below. When the first timer expires, the eNB 200 performs the processing in step S221 (see Fig. 11).

It is noted that a time between activation and expiration of the first timer is set to be longer than a normal interval at which the eNB 200 receives an alive signal transmitted from a higher-level apparatus at predetermined cycles. That is, the first timer is set to expire when communication is disabled between the eNB 200 and a higher-level apparatus via the backhaul. The first timer is directed for the eNB 200 to detect that communication is disabled between the eNB 200 and a higher-level apparatus via the backhaul.

As illustrated in Fig. 11, in step S221, the eNB 200 decides whether a state of the eNB 200 is the public safety prohibition state. When a state of the eNB 200 is not the public safety prohibition state (No), the eNB 200 terminates the processing. On the other hand, when a state of the eNB 200 is the public safety prohibition state (Yes), the eNB 200 performs the processing in step S222.

In step S222, the eNB 200 selects the public safety allowance state. Thereby, a state of the eNB 200 enters the public safety allowance state. That is, the eNB 200 allows the UE 100 under the eNB 200 to perform the D2D communication controlled by the UE 100.

In step S223, the eNB 200 activates the second timer and terminates the processing.

Next, the processing when the second timer expires will be described below. When the second timer expires, the eNB 200 performs the processing in step S241 (see Fig.12).

As illustrated in Fig. 12, in step S241, the eNB 200 decides whether a state of the eNB 200 is the public safety allowance state. When a state of the eNB 200 is not the public safety allowance state (No), the eNB 200 terminates the processing. On the other hand, when a state of the eNB 200 is the public safety allowance state (Yes), the eNB 200 performs the processing in step S242.

In step S242, the eNB 200 decides to transmit a public safety allowance signal. Thereby, the eNB 200 transmits a public safety allowance signal to the UE 100.

In step S243, the eNB 200 activates the second timer.

From the above processing, when a situation of the network is that communication is interrupted from a higher-level apparatus of the eNB 200 to the eNB 200 via the backhaul, the eNB 200 transmits a public safety allowance signal.

### (B) Processing operation pattern 2

Next, there will be described below, with reference to Figs. 13 to 16, a case in which when communication via the backhaul and communication with a neighboring eNB via the X2 interface are interrupted, the eNB 200 transmits a public safety allowance signal.

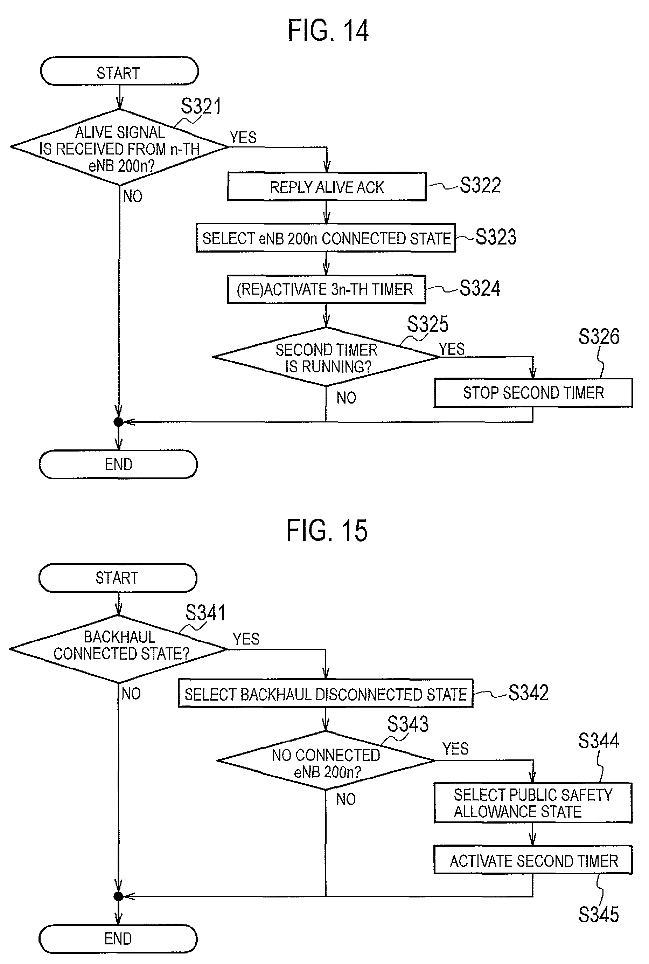

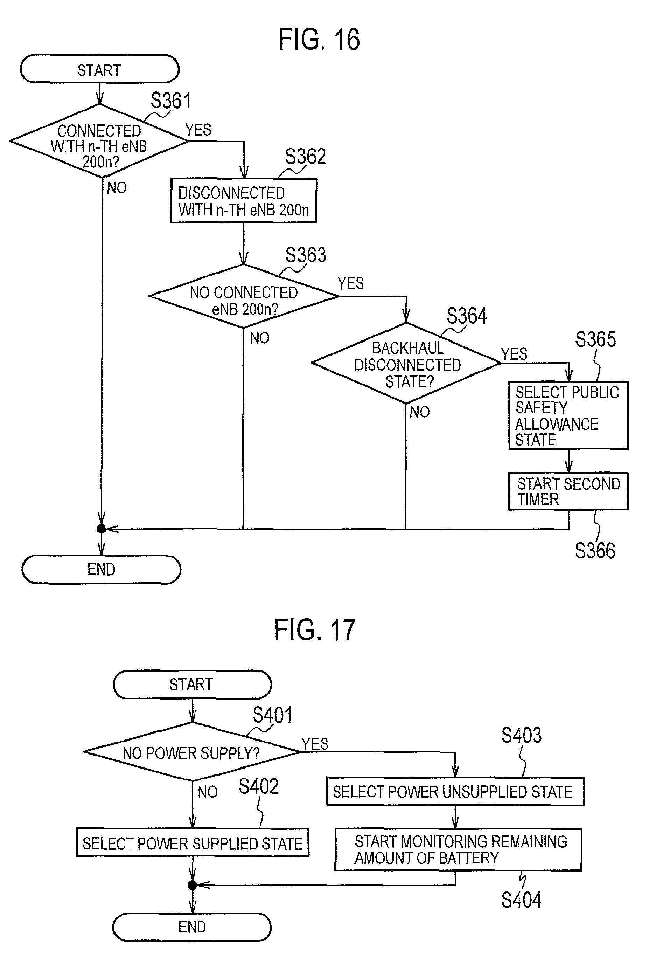

Fig. 13 is a flowchart for illustrating processing of confirming connection between the eNB 200 and a higher-level apparatus via the backhaul. Fig. 14 is a flowchart for illustrating processing of confirming connection between the eNB 200 and a neighboring eNB 200n via the X2 interface. Fig. 15 is a flowchart for illustrating processing when a third timer expires. Fig. 16 is a flowchart for illustrating processing when a 3n-th timer expires.

In this case, the description will be made assuming that not only the eNB 200 but also n neighboring eNBs 200n adjacent to the eNBs 200 are present. The same processing as the above are performed for the processing when the second timer expires.

A processing of confirming connection between the eNB 200 and a higher-level apparatus via the backhaul will be first described.

As illustrated in Fig. 13, steps S301, S302, S305, and S306 correspond to steps S201, S202, S205, and S206 illustrated in Fig. 10.

In step S303, the eNB 200 selects the backhaul, connected state. Thereby, a state of the eNB 200 for backhaul enters the backhaul connected state.

In step S304, the eNB 200 activates the third timer. When the third timer is already activated, the eNB 200 reactivates the third timer, That is, the third timer starts counting from the beginning.

Next, a processing of confirming connection between the eNB 200 and an n-th neighboring eNB 200n via the X2 interface will be described below.

As illustrated in Fig. 14, in step S321, the eNB 200 decides whether it has received an alive signal from an n-th eNB 200n.

When not having received an alive signal (No), the eNB 200 terminates the processing. On the other hand, when having received an alive signal (Yes), the eNB 200 performs the processing in step S322.

In step S322, the eNB 200 replies alive ack indicating reception of the alive signal to the eNB 200n.

In step S323, the eNB 200 changes to the eNB 200n connected state. Thereby, a state of the eNB 200 for connection of eNB 200n enters the eNB 200n connected state.

In step S324, the eNB 200 activates the 3n-th timer. When the 3n-th timer is already activated, the eNB 200 reactivates the 3n-th timer. Thereby, the 3n-th timer starts counting from the beginning.

Steps S325 and S326 correspond to steps S205 and S206 illustrated in Fig. 10.

Next, the processing when the third timer expires will be described below. When the third timer expires, the eNB 200 performs the processing in step S341.

It is noted that the third timer is the same as the first timer. Therefore, a time between activation and expiration of the third timer is set to be longer than a normal interval at which the eNB 200 receives an alive signal transmitted from an eNB 200n at predetermined cycles.

As illustrated in Fig. 15, in step S341, the eNB 200 decides whether a state of the eNB 200 for backhaul is the backhaul connected state. When a state of the eNB 200 is not the backhaul connected state (No), the eNB 200 terminates the processing. On the other hand, when a state of the eNB 200 is the backhaul connected state (Yes), the eNB 200 performs the processing in step S342.

In step S342, the eNB 200 selects the backhaul disconnected state. Thereby, a state of the eNB 200 enters the backhaul disconnected state.

In step S343, the eNB 200 decides whether a connected eNB 200n is present. When all the states of the eNBs 200 for connection of an eNB 200n are not the eNB 200n connected state (the eNB 200n disconnected state: Yes), the eNB 200 performs the processing in step S344. On the other hand, in other cases (No), the eNB 200n terminates the processing. It is noted that the other cases (No) include a case in which at least one of the states of the eNBs 200 for connection of an eNB 200n is the eNB 200n connected state.

Steps S344 and S345 correspond to steps S222 and S223 in Fig. 11.

The processing when the 3n-th timer expires will be described below. When the 3n-th timer expires, the eNB 200 performs the processing in step S361.

A time between activation and expiration of the 3n-th timer is set to be longer than a normal interval at which the eNB 200 receives an alive signal transmitted from an n-th eNB 200n at predetermined cycles. That is, the third timer is set to expire when communication is disabled between the eNB 200 and an eNB 200n via the X2 interface. The third timer is directed for the eNB 200 to detect that communication is disabled between the eNB 200 and an eNB 200n via the X2 interface.

As illustrated in Fig. 16, in step S361, the eNB 200 decides whether it is connected with an n-th eNB 200n. When a state of the eNB 200 for connection of a neighboring eNB 200n is not the eNB 200n connected state (the eNB 200n disconnected state: No), the eNB 200 terminates the processing. On the other hand, when a state of the eNB 200 is the eNB 200n connected state (Yes), the eNB 200 performs the processing in step S362.

In step S362, the eNB 200 selects the eNB 200n disconnected state for a state of the eNB 200 for connection of an n-th neighboring eNB 200n. Thereby, a state of the eNB 200 for connection of an n-th neighboring eNB 200n enters the eNB 200n disconnected state.

Step S363 corresponds to step S343 in Fig. 15.

In step S364, the eNB 200 decides whether a state of the eNB 200 for backhaul is the backhaul disconnected state. When a state of the eNB 200 is not the backhaul disconnected state (No), the eNB 200 terminates the processing. On the other hand, when a state of the eNB 200 is the backhaul disconnected state (Yes), the eNB 200 performs the processing in step S365.

Steps S365 and S366 correspond to steps S222 and S223 in Fig. 11.

From the above processing, when a situation of the network is that a signal is interrupted from a higher-level apparatus to the eNB 200 via the backhaul and a signal is interrupted from an eNB 200n to the eNB 200 via the X2 interface, the eNB 200 transmits a public safety allowance signal.

### (C) Processing operation pattern 3

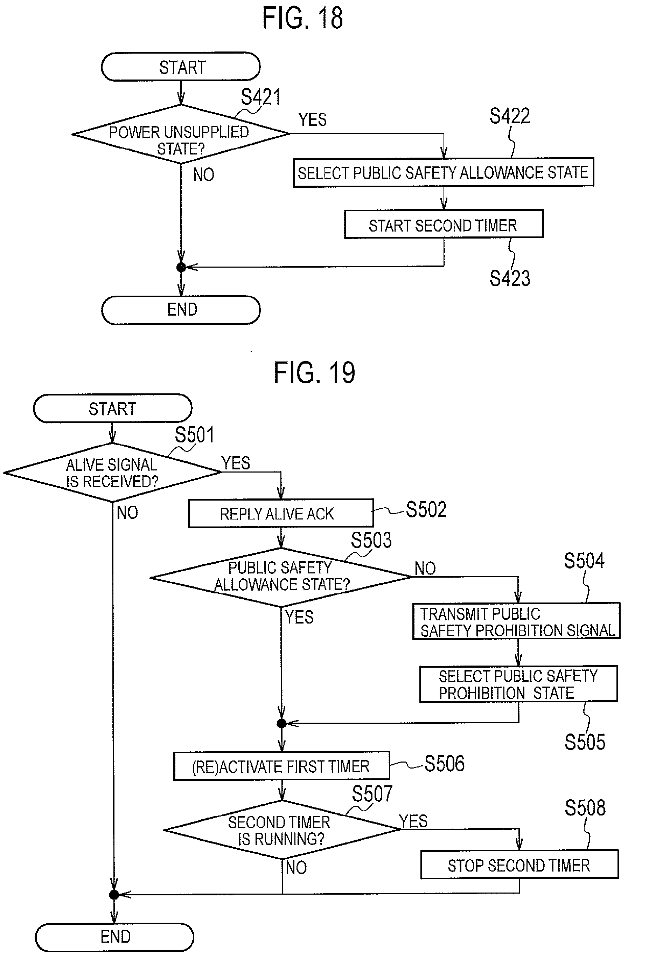

Next, there will be described below, with reference to Fig. 17 and Fig. 18, a case in which when power supply to the eNB 200 is shut off and the remaining amount of battery provided in the eNB 200 lowers a threshold, the eNB 200 transmits a public safety allowance signal. The same processing as the above are performed for the processing when the second timer expires.

Fig. 17 is a flowchart for illustrating processing of monitoring power supply to the eNB 200. Fig. 18 is a flowchart for illustrating processing when the remaining amount of battery in the eNB 200 lowers a predetermined threshold.

In this case, when power supply to the eNB 200 is shut off, the eNB 200 is driven by use of the battery provided in the eNB 200.

As illustrated in Fig. 17, in step S401, the eNB 200 decides whether power is supplied from the outside. When being supplied with power (No), the eNB 200 performs the processing in step S402. On the other hand, when not being supplied with power (that is, when power supply to the eNB 200 is shut off: Yes), the eNB 200 performs the processing in step S403.

In step S402, the eNB 200 selects the power supplied state. Thereby, a state of the eNB 200 for power supply enters the power supplied state.

In step S403, the eNB 200 selects the power unsupplied state. Thereby, a state of the eNB 200 for power supply enters the power unsupplied state. Thereby, the eNB 200 is driven by use of the battery provided in the eNB 200.

In step S404, the eNB 200 starts monitoring the remaining amount of battery.

Next, there will be described below the processing when it is decided that the remaining amount of battery lowers a predetermined threshold on the basis of the monitored remaining amount of battery.

As illustrated in Fig. 18, in step S421, the eNB 200 decides whether it is in the power unsupplied state. When a state of the eNB 200 for power supply is not the power unsupplied state (that is, the power supplied state: No), the eNB 200 terminates the processing. On the other hand, when a state of the eNB 200 is the power unsupplied state (Yes), the eNB 200 performs the processing in step S422.

Steps S422 and S423 correspond to steps S222 and S223 in Fig. 11.

From the above processing, when a situation of the network is that power supply to the eNB 200 from the outside is shut off and the remaining amount of battery provided in the eNB 200 lowers a threshold, the eNB 200 transmits a public safety allowance signal.

### (2) Processing of deciding whether to transmit public safety prohibition signal

A processing of deciding whether to transmit a public safety prohibition signal will be described below with reference to Fig. 19.

Fig. 19 is a flowchart for illustrating processing of deciding whether to transmit a public safety prohibition signal.

After transmitting a public safety allowance signal, the eNB 200 performs the processing described below. In this case, the description will be made assuming that since communication is interrupted from a higher-level apparatus of the eNB 200 to the eNB 200 via the backhaul, the eNB 200 transmits a public safety allowance signal.

As illustrated in Fig. 19, steps S501, S502, and S506 to S508 correspond to steps S201, S202, and S204 to S206 illustrated in Fig. 10.

In step S503, the eNB 200 decides whether a state of the eNB 200 for public safety is the public safety allowance state. When a state of the eNB 200 is not the public safety allowance state (the public safety prohibition state: No), the eNB 200 performs the processing in step S504. On the other hand, when a state of the eNB 200 is the public safety allowance state (Yes), the eNB 200 performs the processing in step S506.

In step S504, the eNB 200 decides to transmit a public safety prohibition signal. Thereby, the eNB 200 transmits a public safety prohibition signal to the UE 100.

In step S505, the eNB 200 selects the public safety prohibition state. Thereby, a state of the eNB 200 enters the public safety prohibition state.

From the above, after communication between the eNB 200 and the higher-level apparatus via the backhaul is recovered (after the situation of the network is recovered), the eNB 200 transmits a public safety prohibition signal once.

### (Operations of UE 100)

Next, the operations of the UE 100 will be described below. Specifically, (1) serving eNB 200 and (2) all eNBs 200 will be described.

### (1) Serving eNB 200

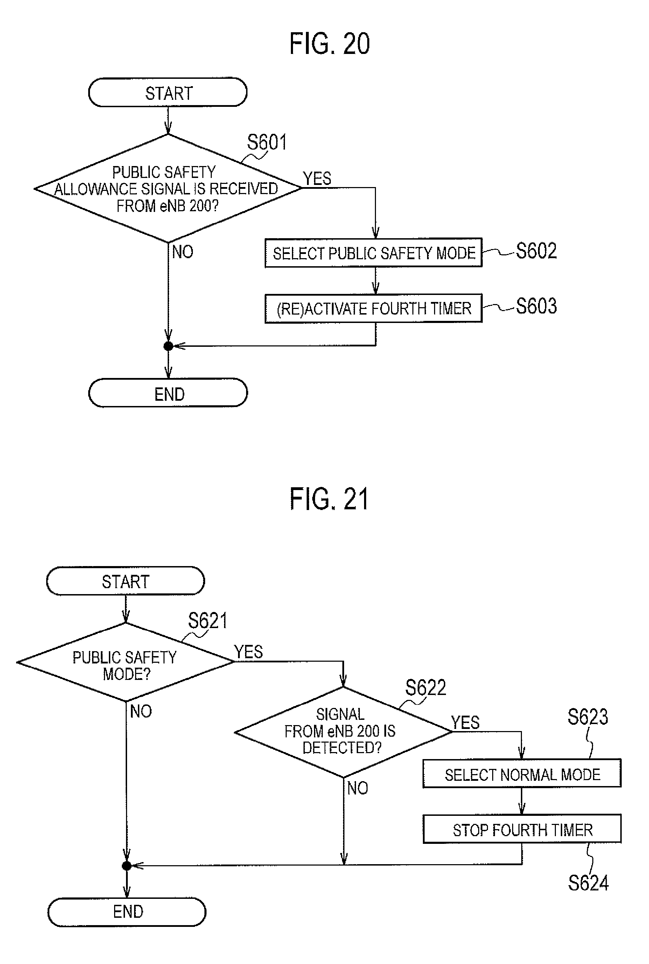

There will be first described, with reference to Fig. 20 and Fig. 21, a processing of selecting a mode applied to the D2D communication on the basis of a reception situation of a signal from the serving eNB 200 in the UE 100.

Fig. 20 is a flowchart for illustrating processing of the UE 100 based on a reception situation of a public safety allowance signal from the eNB 200. Fig. 21 is a flowchart for illustrating processing when a fourth timer expires.

As illustrated in Fig. 20, in step S601, the UE 100 decides whether the UE 100 has received a public safety allowance signal from the eNB 200. When not having received a public safety allowance signal (No), the UE 100 terminates the processing. On the other hand, when having received a public safety allowance signal (Yes), the UE 100 performs the processing in step S602.

In step S602, the UE 100 selects the public safety mode.

In step S603, the UE 100 activates the fourth timer.

The processing when the fourth timer expires will be described below. When the fourth timer expires, the UE 100 performs the processing in step S621.

As illustrated in Fig. 21, in step S621, the UE 100 decides whether it has selected the public safety mode. When not having selected the public safety mode (that is, when having selected the normal mode: No), the UE 100 terminates the processing. On the other hand, when having selected the public safety mode (Yes), the UE 100 performs the processing in step S622.

In step S622, the UE 100 decides whether the UE 100 has detected a signal from the eNB 200. When not having detected a signal from the eNB 200 (No), the UE 100 terminates the processing. On the other hand, when having detected a signal from the eNB 200 (Yes), the UE 100 performs the processing in step S623.

When having received a public safety prohibition signal from the eNB 200, the UE 100 may perform the processing in step S623.

In step S623, the UE 100 selects the normal mode.

In step S624, the UE 100 stops the fourth timer.

From the above, when having received a public safety allowance signal, the UE 100 selects the public safety mode.

While the public safety mode is selected, the UE 100 selects the normal mode when not receiving a public safety allowance signal for a predetermined period of time after receiving a signal from the eNB 200.

It is noted that when receiving a public safety prohibition signal from the eNB 200, the UE 100 may select the normal mode.

### (2) A11 eNBs 200

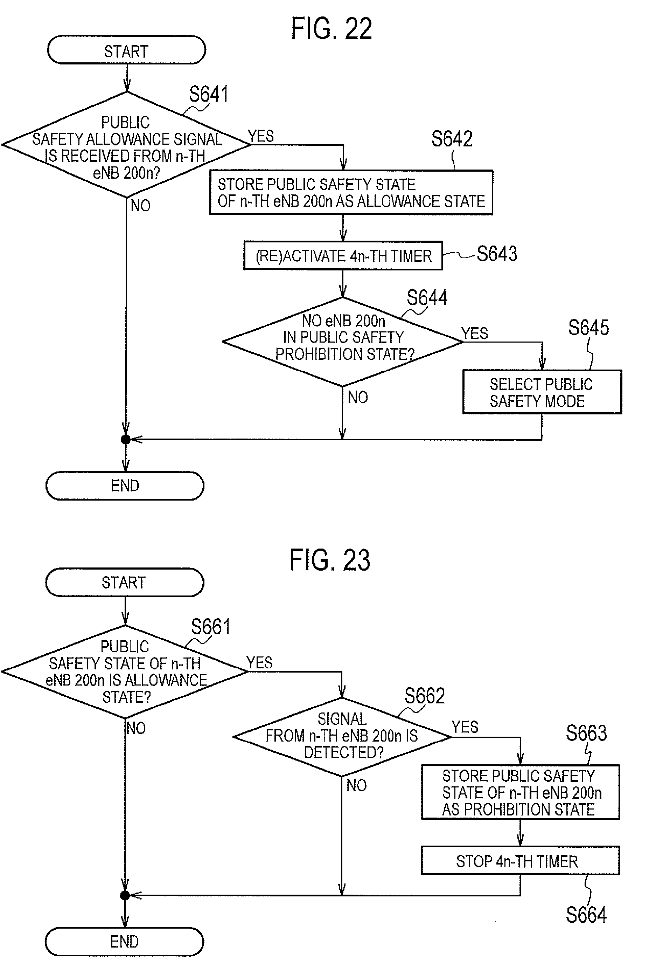

Next, a processing of selecting a mode to be applied to the D2D communication on the basis of a reception situation of signals from all the eNBs 200 detected by the UE 100 will be described below with reference to Fig. 22 to Fig. 24.

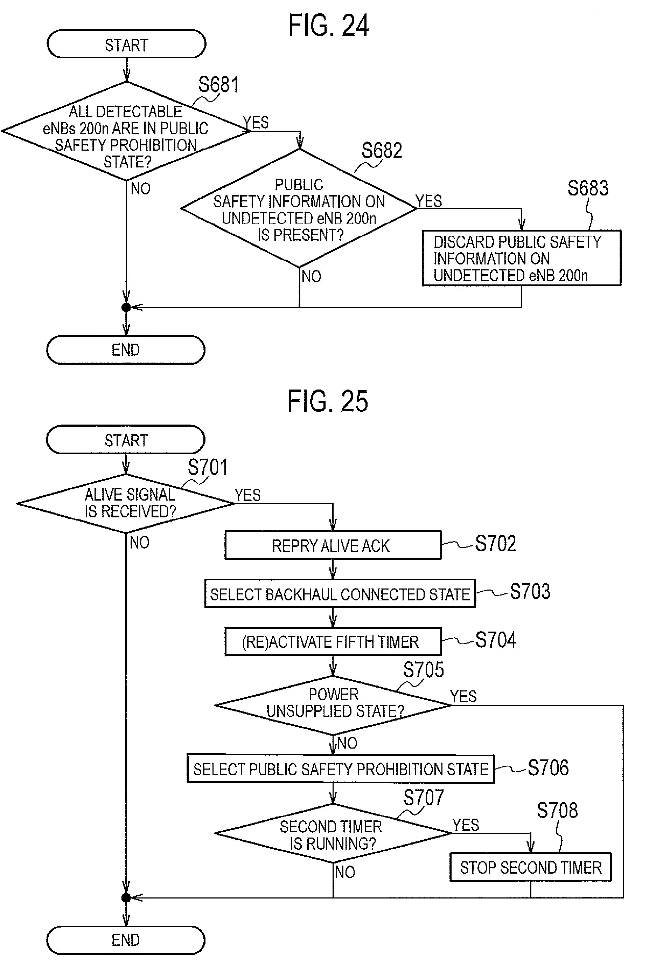

Fig. 22 is a flowchart for illustrating processing based on a reception situation of a public safety allowance signal from an eNB 200n. Fig. 23 is a flowchart for illustrating processing when a 4n-th timer expires. Fig. 24 is a flowchart for illustrating processing of handling a state of an eNB 200n by the UE 100.

The description will be made assuming that the UE 100 receives signals from n eNBs 200.

As illustrated in Fig. 22, in step S641, the UE 100 decides whether the UE 100 has received a public safety allowance signal from an n-th eNB 200n. When not having received a public safety allowance signal (No), the UE 100 terminates the processing. On the other hand, when having received a public safety allowance signal (Yes), the UE 100 performs the processing in step S642.

In step S642, the UE 100 stores a state of the n-th eNB 200n as the public safety allowance state.

In step S643, the UE 100 activates the 4n-th timer. When the 4n-th timer is already activated, the UE 100 reactivates the 4n-th timer.

In step S644, the UE 100 decides whether an eNB 200n in the public safety prohibition state is present (whether all the eNBs 200n are in the public safety allowance state). That is, the UE 100 decides whether the UE 100 has received the public safety allowance signals from all the eNBs 200n. When all the detected eNBs 200n are in the public safety allowance state (Yes), the UE 100 performs the processing in step S645. On the other hand, in other cases (No), the UE 100 terminates the processing. It is noted that the other cases (No) include a case in which some of the detected eNBs 200 are not in the public safety allowance state or a case in which all the detected eNBs 200 are not in the public safety allowance state (in the public safety prohibition state).

In step S645, the UE 100 selects the public safety mode.

Next, the processing when the 4n-th timer expires will be described below. When the 4n-th timer expires, the UE 100 performs the processing in step S661.

As illustrated in Fig. 23, in step S661, the UE 100 decides whether an n-th eNB 200n is in the public safety allowance state. When the n-th eNB 200n is not in the public safety allowance state (in the public safety prohibition state: No), the UE 100 terminates the processing. On the other hand, when the n-th eNB 200n is in the public safety allowance state (Yes), the UE 100 performs the processing in step S662.

In step S662, the UE 100 decides whether it has detected a signal from the eNB 200n. When not having detected a signal from the eNB 200n (No), the UE 100 terminates the processing. On the other hand, when having detected a signal from the eNB 200n (Yes), the UE 100 performs the processing in step S663.

In step S663, the UE 100 stores a state of the n-th eNB 200n as the public safety prohibition state.

In step S664, the UE 100 stops the 4n-th timer.

From the above, when receiving the signals from one or more eNBs 200n and receiving the allowance signals from all of the one or more eNBs 200n, the UE 100 selects the public safety mode.

Next, how the UE 100 handles the eNBs 200n will be described below. According to the present embodiment, the UE 100 discards public safety information indicating whether an undetected eNB 200n is in the public safety allowance state or the public safety prohibition state on a predetermined condition.

In Fig. 24, in step S681, the UE 100 decides whether all the detected eNBs 200n are in the public safety prohibition state. When all the detected eNBs 200n are in the public safety prohibition state (Yes), the UE 100 performs the processing in step S682. On the other hand, in other cases (No), the UE 100 terminates the processing. The other cases (No) include a case in which some of the detected eNBs 200 are not in the public safety prohibition state or a case in which all the detected eNBs 200 are not in the public safety prohibition state.

In step S682, the UE 100 decides whether the UE 100 has public safety information on undetected eNBs 200n. When not having the public safety information on undetected eNBs 200n (No), the UE 100 terminates the processing. On the other hand, when having the public safety information on undetected eNBs 200n (Yes), the UE 100 performs the processing in step S683.

In step S683, the UE 100 discards the public safety information on undetected eNBs 200n. That is, the UE 100 erases the public safety information from a memory 150.

From the above, it is possible to avoid the fact that the UE 100 cannot normally select the D2D communication mode due to the public safety state of the undetected eNBs 200n.

### (Modification of first embodiment)

A modification of the first embodiment will be described below with reference to Figs. 25 to 27. Differences from the above embodiment will be mainly described, and the description of the same parts will be omitted as needed.

According to the present modification, there will be described a case in which after the eNB 200 transmits an emergency flash report, a situation of the network is deteriorated and a public safety allowance signal is transmitted. The same processing as the above are performed for the processing when the second timer expires.

According to the present modification, there will be described two processing operation patterns for a case in which the eNB 200 transmits a public safety allowance signal when communication via the backhaul is interrupted or when power supply to the eNB 200 from the outside is interrupted as described in the above embodiment.

At first, the description will be made assuming that the eNB 200 transmits (broadcasts) an emergency flash report to the UE 100. An emergency flash report is information on disasters. For example, an emergency flash report is information on an occurrence or possible occurrence of earthquake and/or tsunami. An emergency flash report is broadcasted in order to rapidly notify of information on disasters to the UE 100.

When broadcasting an emergency flash report, the eNB 200 activates a fifth timer. When the fifth timer is already activated, the eNB 200 reactivates the fifth timer.

After activating the fifth timer, the eNB 200 selects the emergency flash report transmitted state. Thereby, a state of the eNB 200 for emergency flash report enters the emergency flash report transmitted state.

When the fifth timer expires, the eNB 200 selects the emergency flash report non-transmitted state.

### (A) Processing operation pattern 1

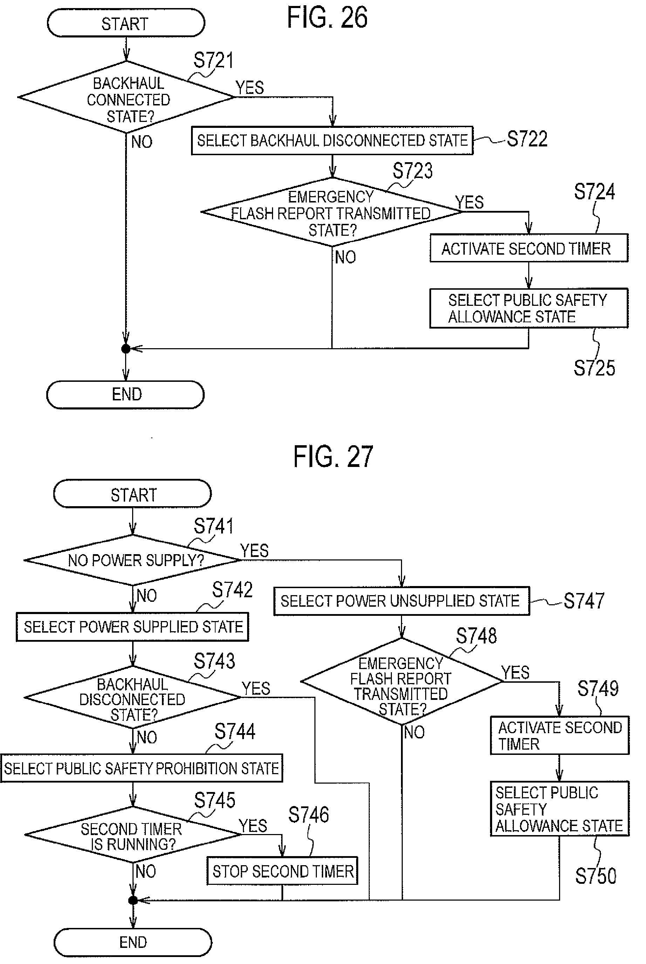

A processing operation pattern 1 will be described below with reference to Figs. 25 and 26. Fig. 25 is a flowchart for illustrating processing of confirming connection between the eNB 200 and a higher-level apparatus via the backhaul. Fig. 26 is a flowchart for illustrating processing when the fifth timer expires.

It is noted that the fifth timer is the same as the first timer. Therefore, a time between activation and expiration of the fifth timer is set to be longer than a normal interval at which the eNB 200 receives an alive signal transmitted from a higher-level apparatus at predetermined cycles.

As illustrated in Fig. 25, steps S701 to S703 correspond to steps S301 to S303 illustrated in Fig. 13.

In step S704, the eNB 200 activates the fifth timer. When the fifth timer is already activated, the eNB 200 reactivates the fifth timer.

In step S705, the eNB 200 decides whether it is in the power unsupplied state. When a state of the eNB 200 for power supply is the power unsupplied state (Yes), the eNB 200 terminates the processing. On the other hand, when a state of the eNB 200 is not the power unsupplied state (that is, the power supplied state: No), the eNB 200 performs the processing in step S706.

In step S706, the eNB 200 selects the public safety prohibition state as a state of the eNB 200 for public safety.

Steps S707 and S708 correspond to steps S205 and S206 illustrated in Fig. 10.

The processing when the fifth timer expires will be described below. When the fifth timer expires, the eNB 200 performs the processing in step S721.

As illustrated in Fig. 26, steps S721 and S722 correspond to steps S341 and S342 illustrated in Fig. 15.

In step S723, the eNB 200 decides whether a state of the eNB 200 for emergency flash report is the emergency flash report transmitted state. When a state of the eNB 200 is not the emergency flash report transmitted state (No), the eNB 200 terminates the processing. When a state of the eNB 200 is the emergency flash report, transmitted state (Yes), the eNB 200 performs the processing in step S724.

Steps S724 and S725 correspond to steps S345 and S344 illustrated in Fig. 15.

### (B) Processing operation pattern 2

A processing operation pattern 2 will be described below with reference to Fig. 27. Fig. 27 is a flowchart for illustrating processing of monitoring power supply to the eNB 200.

As illustrated in Fig. 27, steps S741, S742, and S747 correspond to steps S401, S402, and S403 illustrated in Fig. 17.

In step S743, the eNB 200 decides whether it is in the backhaul disconnected state. When a state of the eNB 200 for backhaul is the backhaul disconnected state (Yes), the eNB 200 terminates the processing. On the other hand, when a state of the eNB 200 is not the backhaul disconnected state (No), the eNB 200 performs the processing in step S744.

Steps S744 to S746 correspond to steps S706 to S708 illustrated in Fig. 25.

Steps S748 to S750 correspond to steps S723 to S724 illustrated in Fig. 26.

From the above, when receiving an emergency flash report and then receiving a public safety allowance signal, the UE 100 selects the public safety mode.

### (Conclusion of first embodiment)

According to the present embodiment, the UE 100 (the controller in the UE 100) selects either the normal mode or the public safety mode on the basis of a reception situation of a public safety allowance signal and a public safety prohibition signal transmitted depending on a situation of the network. Thereby, either the normal mode or the public safety mode can be selected as needed depending on a situation of the network, and thus the D2D communication can be effectively used. For example, when a situation of the network is normal, the normal mode is selected and the network controls the D2D communication so that an interference on other UE 100 and the eNBs 200 present around the UE 100 can be restricted. On the other hand, when a situation of the network is abnormal, the public safety mode is selected so that even if a situation of the network is unstable, the D2D communication can be effectively used.

According to the present embodiment, when receiving a public safety allowance signal, the UE 100 selects the public safety mode. Thereby, the eNB 200 can designate a timing at which the D2D communication is controlled by the UE 100, and thus the performing the D2D communication for the UE 100 to freely apply the public safety mode is restricted. Consequently, an interference can be prevented from occurring.

According to the present embodiment, when receiving the signals from one or more eNBs 200n and receiving the public safety allowance signals from all of the one or more eNBs 200n, the UE 100 selects the public safety mode. Thereby, all the eNBs 200n present around the UE 100 apply the public safety mode thereby to allow the D2D communication so that even if the UE 100 applies the public safety mode to perform the D2D communication, an interference on the eNBs 200n is less likely to occur.

According to the present embodiment, when receiving a public safety allowance signal after receiving an emergency flash report, the UE 100 selects the public safety mode. Thereby, an emergency flash report is transmitted from the eNB 200 and then a public safety allowance signal is transmitted, and thus a situation of the network is likely to be unstable. Therefore, it is possible to prevent the public safety mode from being selected when a public safety allowance signal is erroneously transmitted.

According to the present embodiment, a public safety allowance signal includes information on a frequency band to be used for the D2D communication. Thereby, an interference given by the UE 100 performing the D2D communication can be further restricted than when the UE 100 uses a frequency band used for the D2D communication thereby to freely schedule.

According to the present embodiment, while the public safety mode is selected and cellular communication is allowed, the UE 100 preferentially performs the D2D communication ahead of cellular communication. Thereby, the D2D communication can further reduce loads on the unstable network than cellular communication via a core network.

According to the present embodiment, when a situation of the network is that a signal is interrupted from a higher-level apparatus to the eNB 200 via the backhaul, a public safety allowance signal is transmitted. When a situation of the network is that a signal is interrupted from a higher-level apparatus to the eNB 200 via the backhaul and a signal is interrupted from an eNB 200n to the eNB 200 via the X2 interface, a public safety allowance signal is transmitted. When a situation of the network is that power supply to the eNB 200 is shut off and the remaining amount of battery provided in the eNB 200 lowers a threshold, a public safety allowance signal is transmitted. When a situation of the network is bad in this way, the D2D communication is performing under control of the UE 100 and thus the D2D communication can be effectively used.

According to the present embodiment, when receiving a public safety prohibition signal, the UE 100 selects the normal mode. Thereby, the eNB 200 can designate a timing at which the D2D communication is controlled by the UE 100, and the performing the D2D communication for the UE 100 to freely apply the public safety mode is restricted. Consequently, an interference can be prevented from occurring.

According to the present embodiment, when not receiving a public safety allowance signal for a predetermined period of time after receiving a signal from the eNB 200, the UE 100 selects the normal mode. Thereby, when the eNB 200 does not allow public safety, the UE 100 can be prevented from indefinitely performing the D2D communication in the public safety mode.

### [Second embodiment]

### (Schematic operations of mobile communication system according to second embodiment)

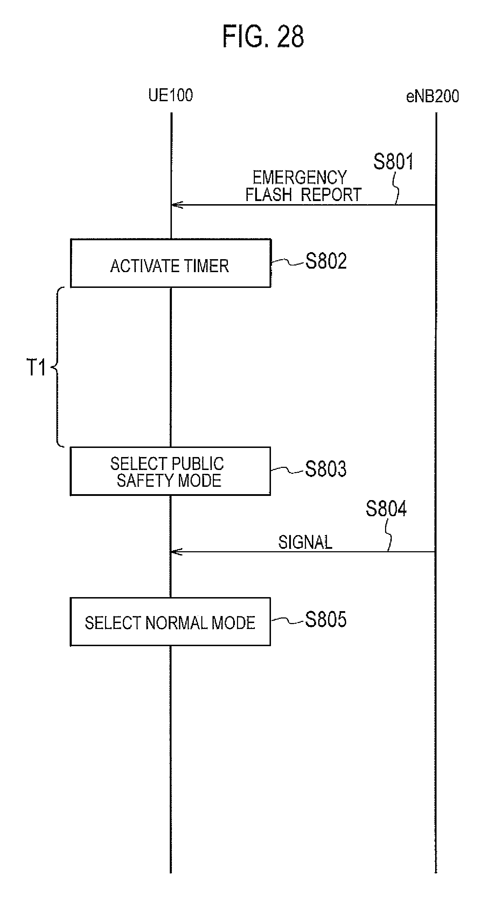

Next, the schematic operations of a mobile communication system according to a second embodiment will be described below with reference to Fig. 28. Fig. 28 is a sequence diagram illustrating exemplary operations of the mobile communication system according to the second embodiment.

The eNB 200 transmits a public safety allowance signal according to the above embodiment, while the eNB 200 does not transmit a public safety allowance signal and the UE 100 selects the public safety mode according to the present embodiment.

As illustrated in Fig. 28, in step S801, the eNB 200 transmits an emergency flash report. The UE 100 receives the emergency flash report.

In step S802, the UE 100 activates a timer in response to reception of the emergency flash report.

In step S803, when T1 elapses and the timer expires, the UE 100 selects the public safety mode.

In step S804, the eNB 200 transmits a signal. The UE 100 receives the signal. The signal is an alive signal, for example.

In step S805, the UE 100 selects the normal mode in response to reception of the signal.

### (Operations of UE 100)

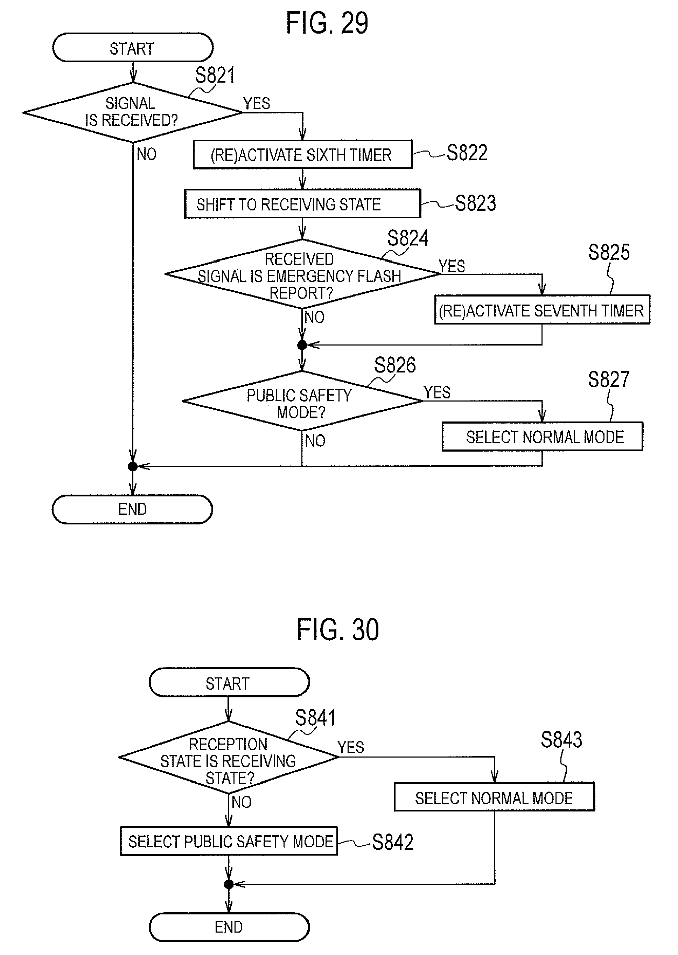

The operations of the UE 100 will be described below with reference to Fig. 29 and Fig. 30. Fig. 29 is a flowchart for explaining a processing of selecting a D2D communication mode in the UE 100 based on a reception situation of a signal from the eNB 200. Fig. 30 is a flowchart for illustrating processing when a seventh timer expires.

As illustrated in Fig. 29, in step S821, the UE 100 decides whether the UE 100 has received a signal from the eNB 200. When not having received a signal (No), the UE 100 terminates the processing. On the other hand, when having received a signal (Yes), the UE 100 performs the processing in step S822.

In step S822, the UE 100 activates the sixth timer. When the sixth timer is already activated, the UE 100 reactivates the sixth timer. When the sixth timer expires, the UE 100 shifts a reception state of a signal from the eNB 200 in the UE 100(which will be called reception state of the UE 100 below) from a receiving state indicating that a signal is being received from the eNB 200 to an unreceived state indicating that a signal is not being received from the eNB 200.

In step S823, when a reception state of the UE 100 is the unreceived state, the UE 100 shifts the reception state of the UE 100 from the unreceived state to the receiving state.

In step S824, the UE 100 decides whether the signal received from the eNB 200 is an emergency flash report. When the signal is an emergency flash report (Yes), the UE 100 performs the processing in step S825. On the other hand, when the signal received from the eNB 200 is not an emergency flash report (No), the UE 100 performs the processing in step S826.

In step S825, the UE 100 activates the seventh timer. When the seventh timer is already activated, the UE 100 reactivates the seventh timer.

In step S826, the UE 100 decides whether a mode of the UE 100 applied to the D2D communication (D2D communication mode) is the public safety mode. When the D2D communication mode is the public safety mode, the UE 100 selects the normal mode. On the other hand, when the D2D communication mode is not the public safety mode, the UE 100 terminates the processing.

The processing when the seventh timer expires will be described below. When the seventh timer expires, the UE 100 performs the processing in step S841.

In step S841, the UE 100 decides whether a reception state of the UE 100 is the receiving state. When a reception state of the UE 100 is not the receiving state (No), the UE 100 performs the processing in step S842. On the other hand, when a reception state of the UE 100 is the receiving state (Yes), the UE 100 performs the processing in step S843.

In step S842, the UE 100 selects the public safety mode.

In step S843, the UE 100 selects the normal mode.

From the above processing, when the seventh timer expires and when the UE 100 has received a signal from the eNB 200, the UE 100 selects the normal mode. On the other hand, when the seventh timer expires and when the UE 100 does not have received a signal from the eNB 200, the UE 100 selects the public safety mode.

When receiving a signal other than an emergency flash report from the eNB 200, the eNB 200 selects the normal mode.

It is noted that when the UE 100 selects the public safety mode as the D2D communication mode and performs the D2D communication, the UE 100 may utilize the information on a frequency band to be used for the D2D communication included in a master information block (MIB) or system information block (SIB) from the eNB 200, for example. Alternatively, when establishing connection with the eNB 200, the UE 100 may utilize the information on a frequency band to be used for the D2D communication included in the RRC message.

### (Conclusion of second embodiment)

According to the second embodiment, when a signal from the eNB 200 is interrupted for a predetermined period of time in the UE 100 after reception of an emergency flash report from the eNB 200, or when the seventh timer expires, the eNB 200 performs the processing in step S221. Thereby, even when not receiving a public safety allowance signal from the eNB 200, the UE 100 can select the public safety mode. Therefore, for example, even if the eNB 200 is down before transmitting a public safety allowance signal due to disasters, if the eNB 200 transmits an emergency flash the UE 100 can perform the D2D communication in the public safety mode.

According to the second embodiment, when having received a signal from the eNB 200, the UE 100 selects the normal mode. Thereby, even when the eNB 200 does not transmit a public safety prohibition signal, the UE 100 can select the normal mode, and thus the UE 100 can be prevented from indefinitely performing the D2D communication in the public safety mode.

### [Other embodiment]

The present invention has been described above according to the embodiments, but the description and drawings as part of the disclosure should not be considered as limiting the present invention. Various alternative embodiments, examples, and operation techniques are made clear to those skilled in the art from the disclosure.

The above embodiments are such that the eNB 200 performs the processing of deciding a public safety allowance signal and a public safety prohibition signal, but are not limited thereto. A higher-level apparatus of the eNB 200 may perform the decision processing.

The first embodiment is such that the eNB 200 transmits a public safety prohibition signal once in "(2) processing of deciding whether to transmit public safety prohibition signal", but is not limited thereto. The eNB 200 may transmit a public safety prohibition signal periodically or aperiodically, not limited to once, after a situation of the network is recovered.

When not being able to detect the eNB 200 transmitting a public safety allowance signal in the public safety mode (that is, when the UE 100 cannot receive a message by a broadcast manner from the eNB 200), the UE 100 may keep the public safety mode until receiving a public safety prohibition signal or until an allowance update timer of the public safety mode expires.

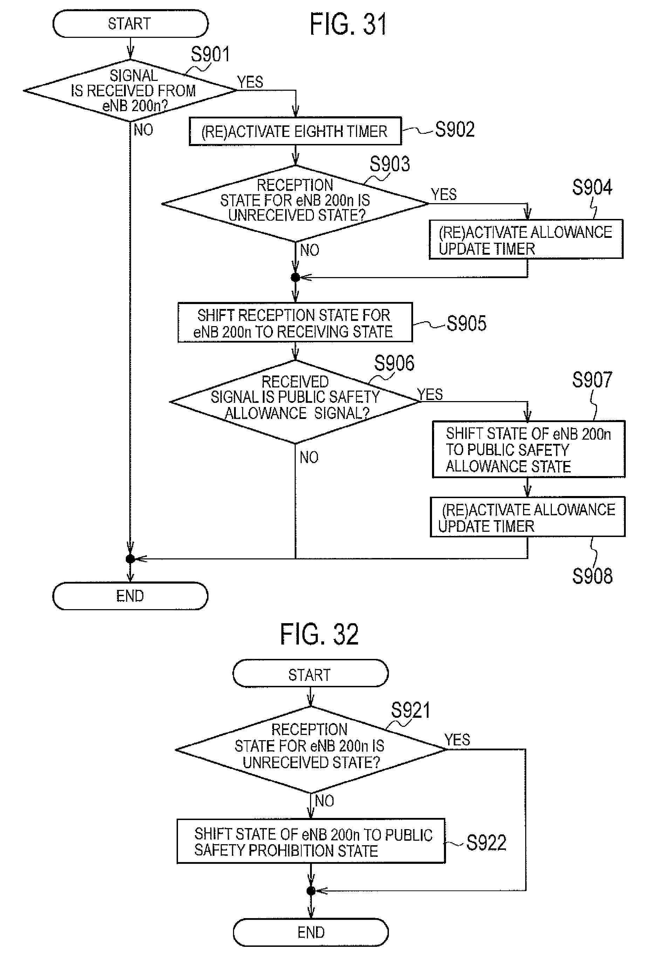

Specifically, the UE 100 may perform the processing as illustrated in Fig. 31 and Fig. 32. Fig. 31 is a flowchart for illustrating processing of selecting a mode to be applied to the D2D communication in the UE 100 on the basis of a reception situation of a signal from an eNB 200n. Herein, the eNB 200n may be the eNB 200 transmitting a public safety allowance signal or other eNB 200. Fig. 32 is a flowchart for illustrating processing when the allowance update timer expires.

As illustrated in Fig. 31, in step S901, the UE 100 decides whether the UE 100 has received a signal from an eNB 200n. When not having received a signal (No), the UE 100 terminates the processing. On the other hand, when having received a signal (Yes), the UE 100 performs the processing in step S902.

In step S902, the UE 100 activates an eighth timer. When the eighth timer is already activated, the UE 100 reactivates the eighth timer.

When the eighth timer expires, the UE 100 shifts a reception state of the signal from the eNB 200n in the UE 100 to the unreceived state. That is, the UE 100 stores a reception state of the UE 100 for eNB 200n as the unreceived state.

In step S903, the UE 100 decides whether a reception state of the UE 100 for eNB 200n is the unreceived state. When a reception state of the UE 100 for eNB 200n is the unreceived state (Yes), the UE 100 performs the processing in step S904. On the other hand, when a reception state of the UE 100 for eNB 200n is not the unreceived state (No), the UE 100 performs the processing in step S905.

In step S904, the UE 100 activates the allowance update timer. When the allowance update timer is already activated, the UE 100 reactivates the allowance update timer.

In step S905, the UE 100 shifts a reception state of the UE 100 for eNB 200n to the receiving state. That is, the UE 100 stores a reception state of the UE 100 for eNB 200n as the receiving state.

In step S906, the UE 100 decides whether the signal received from the eNB 200n is a public safety allowance signal. When the received signal is not a public safety allowance signal (No), the UE 100 terminates the processing. On the other hand, when the received signal is a public safety allowance signal (Yes), the UE 100 performs the processing in step S907.

In step S907, the UE 100 shifts a state of the eNB 200n in the UE 100 to the public safety allowance state. That is, the UE 100 stores a state of the eNB 200n in the UE 100 as the public safety allowance state.

In step S908, the UE 100 activates the allowance update timer as in step S904.

The processing when the allowance update timer expires will be described below. When the allowance update timer expires, the UE 100 performs the processing in step S921.

As illustrated in Fig. 32, in step S921, the UE 100 decides whether a reception state of the UE 100 for eNB 200n is the unreceived state. When a reception state of the UE 100 for eNB 200n is the unreceived state, the UE 100 terminates the processing. When a reception state of the UE 100 for eNB 200n is not the unreceived state, the UE 100 performs the processing in step S922.

In step S922, the UE 100 shifts a state of the eNB 200n in the UE 100 to the public safety prohibition state. That is, the UE 100 stores a state of the eNB 200n as the public safety prohibition state.

When a state of the eNB 200n in the UE 100 is the public safety allowance state, the UE 100 selects the public safety mode. On the other hand, when a state of the eNB 200n is the public safety prohibition state, the UE 100 selects the normal mode.

It is noted that when the states of all the eNBs 200n detected by the UE 100 are the public safety allowance state, the UE 100 selects the public safety mode, and in other cases, may select the normal mode. It is noted that the other cases include a case in which some of the eNBs 200n detected by the UE 100 are not in the public safety allowance state or a case in which all the eNBs 200n detected by the UE 100 are not in the public safety allowance state.

In addition, even when the UE 100 cannot receive a public safety prohibition signal from the eNB 200 as described below, the UE 100 may select the normal mode and shift from the public safety mode to the normal mode.

Specifically, the description will be first made assuming that the UE 100 selects the public safety mode and cannot detect the eNB 200.

For example, when detecting a new eNB 200-1 due to movement of the UE 100 and not being able to receive a public safety allowance signal from the eNB 200-1 for a predetermined period of time after detecting a signal from the eNB 200-1, the UE 100 may select the normal mode.

When the UE 100 selecting the public safety mode performs a connection setup request and a state of the eNB 200 is the public safety prohibition state (that is, when the UE 100 is prohibited from selection of the public safety mode), the eNB 200 may instruct the UE 100 to select not the public safety mode but the normal mode during the connection procedure with the UE 100. That is, the eNB 200 may transmit a public safety prohibition signal together with a signal (such as RRC connection setup) used for establishing connection with the UE 100. Further, the eNB 200 may include information indicating that a state of the eNB 200 is the public safety prohibition state in a signal used for establishing connection with the UE 100, and then transmit the signal to the UE 100.

It is noted that the UE 100 selecting the public safety mode may include the information indicating that the UE 100 selects the public safety mode in the request of establishing connection with the eNB 200.

The above embodiments and modifications may be of course combined as needed.

For example, as described in the second embodiment, the UE 100, which does not receive a public safety allowance signal after receiving an emergency flash report and selects the public safety mode, may select the normal mode when receiving a public safety prohibition signal.

In the above-described embodiments, an example in which the present invention is applied to the LTE system has been described; however, the applying present invention is not limited to the LTE system and the present invention may also be applied to systems, other than the LTE system.

In addition, the entire content of JP Patent Application No. 2013-093039 (filed on April 25, 2013) is incorporated in the present specification by reference.

### INDUSTRIAL APPLICABILITY

As described above, the user terminal, the base station, and the processor be able to effectively use the D2D communication; and thus are useful in a mobile communication field.

## Claims

1. A user terminal in a mobile communication system comprising a network configured to control D2D communication being direct device to device communication, the user terminal comprising:
a controller configured to select either a first mode in which the D2D communication is controlled by the network or a second mode in which the D2D communication is controlled by the user terminal instead of the network, as a mode to be applied to the D2D communication,
wherein the controller selects either the first mode or the second mode on the basis of a reception situation of a predetermined signal transmitted depending on a situation of the network.

2. The user terminal according to claim 1,
wherein the predetermined signal is an allowance signal for allowing to select the second mode, and
when receiving the allowance signal, the controller selects the second mode.

3. The user terminal according to claim 2,
wherein the user terminal receives signals from one or more base stations included in the network, and
when receiving the allowance signals from all of the one or more base stations, the controller selects the second mode.

4. The user terminal according to claim 2,
wherein when receiving the allowance signal after receiving an emergency flash report indicating information on disasters, the controller selects the second mode.

5. The user terminal according to claim 2,
wherein the allowance signal includes information indicating a Frequency band to be used for the D2D communication.

6. The user terminal according to claim 2,
wherein while the second mode is selected as the mode, the controller preferentially performs the D2D communication ahead of cellular communication when being able to perform the cellular communication being communication via a core network included in the network.

7. The user terminal according to claim 2,
wherein the allowance signal is transmitted when a situation of the network is that a signal is interrupted to a base station via a backhaul from a higher-level apparatus of the base station included in the network.

8. The user terminal according to claim 2,
wherein the allowance signal is transmitted when a situation of the network is that a signal is interrupted to a base station via a backhaul from a higher-level apparatus of the base station included in the network and a signal is interrupted to the base station via an X2 interface from a neighboring base station adjacent to the base station.

9. The user terminal according to claim 2,
wherein the allowance signal is transmitted when a situation of the network is that power supply to a base station included in the network is shut off and a remaining amount of a battery provided in the base station lowers a threshold.

10. The user terminal according to claim 1,
wherein the predetermined signal is a prohibition signal for prohibiting selection of the second mode, and
when receiving the prohibition signal, the controller selects the first mode.

11. The user terminal according to claim 2,
wherein while the second mode is selected as the mode, the controller selects the first mode when not receiving the allowance signal for a predetermined period of time after receiving a signal from a base station included in the network.

12. The user terminal according to claim 1,
wherein the controller selects the second mode when not receiving a signal from a base station included in the network for a predetermined period of time after receiving an emergency flash report indicating information on disasters from the base station.

13. The user terminal according to claim 12,
wherein while the second mode is selected as the mode, the controller selects the first mode when having received a signal from the base station.

14. A base station in a mobile communication system comprising a network configured to control D2D communication being direct device to device communication and the base station included in the network, the base station comprising:
a transmitter configured to transmit an allowance signal for allowing to select a second mode or a prohibition signal for prohibiting selection of the second mode to a user terminal capable of selecting either a first mode in which the D2D communication is controlled by the network or the second mode in which the D2D communication is controlled by the user terminal instead of the network, as a mode to be applied to the D2D communication; and
a controller configured to control transmission of the allowance signal or the prohibition signal depending on a situation of the network including the base station.

15. The base station according to claim 14,
wherein while the selection of the second mode is prohibited, the controller transmits the prohibition signal together with a signal used for establishing connection when the user terminal selecting the second mode requests to establish the connection with the base station.

16. A processor provided in a user terminal in a mobile communication system comprising a network configured to control D2D communication being direct device to device communication, the processor performing:
a processing of selecting either a first mode in which the D2D communication is controlled by the network or a second mode in which the D2D communication is controlled by the user terminal instead of the network, as a mode to be applied to the D2D communication; and
a processing of selecting either the first mode or the second mode on the basis of a reception situation of a predetermined signal transmitted depending on a situation of the network.
